(19) Europäisches Patentamt
European Patent Office
Office européen des brevets

(11) **EP 2 039 512 A1**

(12) **EUROPEAN PATENT APPLICATION**
published in accordance with Art. 153(4) EPC

(43) Date of publication:
**25.03.2009 Bulletin 2009/13**

(51) Int Cl.:
*B41F 33/00* (2006.01)     *B41F 31/02* (2006.01)
*G01J 3/46* (2006.01)      *G06F 3/12* (2006.01)
*G06T 1/00* (2006.01)      *H04N 1/46* (2006.01)
*H04N 1/60* (2006.01)

(21) Application number: **07790717.8**

(22) Date of filing: **12.07.2007**

(86) International application number:
**PCT/JP2007/063923**

(87) International publication number:
**WO 2008/007746 (17.01.2008 Gazette 2008/03)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.07.2006  JP 2006191164**

(71) Applicant: **Mitsubishi Heavy Industries, Ltd.**
**Tokyo 108-8215 (JP)**

(72) Inventors:
• **OZAKI, Ikuo**
  **Hirosima-shi, Hiroshima 733-8553 (JP)**
• **TAKEMOTO, Shuichi**
  **Mihara-shi, Hiroshima 729-0393 (JP)**
• **TASAKA, Norifumi**
  **Mihara-shi, Hiroshima 729-0393 (JP)**

(74) Representative: **HOFFMANN EITLE**
**Patent- und Rechtsanwälte**
**Arabellastraße 4**
**81925 München (DE)**

(54) **PRINTING SIMULATION METHOD AND DEVICE, METHOD AND DVICE FOR CONTROLLING PATTERN COLOR TONE OF PRINTER, AND PRINTER**

(57)     A printing simulation method and apparatus, a picture color tone controlling method and method for a printing press and a printing press are disclosed by which, before printing is carried out, the color tone can be confirmed readily so that a demand for a print color tone can be satisfied precisely while appearance of broke is suppressed. A printing characteristic of a printing press and data of a printing picture to be printed by the printing press are acquired, and an image of the printing picture obtained by simulating color by the printing press with the data of the printing picture converted using the printing characteristic of the printing press is displayed on a monitor screen. Then, while a sample of the printing picture is referred to, correction of the color state of the picture displayed on the monitor screen with respect to the density of the ink color upon printing is carried out so that the color tone of the picture displayed on the monitor screen approaches the color tone of the sample picture. A target density is set in response to the correction, and printing is carried out while the ink supplying state by an ink supplying apparatus for each color is controlled so that the actual density of the color of a result of printing approaches the target density value.

FIG. 5

Start

Select page number corresponding to sample (carried-in galley) from monitor screen — b10

Calculation apparatus simulates color development using reference rotary press ICC profile and outputs simulated color development to monitor — b20

Adjust overall color or key zone color changing knob to adjust color of carried-in galley — b30

Calculation apparatus calculates ICC profile for each key zone corresponding to solid density change, successively simulates color development and outputs simulated color development to monitor — b40

If color is adjusted, then completion button on monitor screen is depressed — b50

Transfer changed solid density value to printing automatic controlling apparatus — b60

Perform automatic control utilizing target value changing function of printing automatic controlling apparatus — b70

End

**Description**

BACKGROUND OF THE INVENTION

1) Field of the Invention

This invention relates to a method of simulating printing and a printing simulation apparatus suitable for use with the method, a method for controlling the picture color tone of a printing press and a picture color tone controlling apparatus for a printing press suitable for use with the method, and a printing press which includes a printing simulation apparatus and a picture color tone controlling apparatus of the type described.

2) Description of the Related Art

Various techniques have been proposed in order to control the color tone of a picture of a printing press. For example, in techniques disclosed in Japanese Patent Laid-Open No. 2001-18364 (hereinafter referred to as Patent Document 1) and Patent Document 2: Japanese Patent Laid-Open No. 2001-47605 (hereinafter referred to as Patent Document 2), the spectral reflectance of a picture printed by printing units of different colors is measured by a spectrometer and then the spectral reflectance (average spectral reflectance of an entire key zone) is calculated for each of key zones of ink keys and then the spectral reflectance of each key zone is converted into a color coordinate value ($L^*a^*b^*$). Then, the ink supplying amount of each color is adjusted to perform test printing, and if a printing sheet (hereinafter referred to as OK sheet) having a desired color tone is obtained, then the color coordinate value of each key zone of the OK sheet is set to a target color coordinate value. Then, actual printing is started and the difference (color difference) between the color coordinate values of the OK sheet and a printing sheet (printing sheet obtained by actual printing is hereinafter referred to as actual printing sheet) is calculated, and the opening of the ink key of each printing unit is adjusted by online control so that the color difference may be reduced to zero.

However, a spectrometer used as a measurement means in the techniques described above requires a high cost. Further, it is difficult for the spectrometer, from its performance, to measure a target (printing sheet) which moves at a very high speed as in the case of a rotary press for newspapers. Further, in the techniques described above, since the color tone control is started after an OK sheet is printed, a great amount of broke appears after the printing process is started until the OK sheet is printed.

Thus, Japanese Patent Laid-Open No. 2004-106523 (hereinafter referred to as Patent Document 3) discloses a technique wherein, in order to solve such subjects as described above, color tone control is performed in accordance with the following procedure.

First, a target density for each ink supplying unit width when a printing picture is divided by the ink supplying unit width of an ink supplying apparatus is set. It is to be noted that, where the ink supplying apparatus is an ink key apparatus, the ink supplying unit width of the ink supplying apparatus is the key width (key zone) of each ink key, but where the ink supplying apparatus is a digital pump apparatus, the ink supplying unit width is the pump width of each digital pump. It is to be noted that a setting method for the target density is hereinafter described.

If printing is started and an actual printing sheet is obtained, then an actual density for each ink supplying unit width of the actual printing sheet is measured using an IRGB densitometer. Then, actual tone values for individual ink colors corresponding to the actual density are calculated based on a corresponding relationship set in advance between tone values and densities for the individual ink colors. As a method for determining actual tone values from an actual density, a database wherein a relationship between tone values and densities for individual ink colors is stored, for example, a database wherein data obtained by printing a color scale of the standards of the Japan Color (ISO12642) for Newspaper Printing established by the ISO/TC130 National Commission and actually measuring the color scale by means of an IRGB densitometer are stored, may be used. More simply, the database can be utilized also to utilize an approximate value calculated using the known Neugebauer expression. Further, target tone values for each ink color corresponding to the target densities are calculated based on the corresponding relationship described above between tone values and densities. Different from the actual tone values, the target tone values need not be calculated every time, but it is sufficient to calculate the target tone values once unless the target density varies. For example, the target tone values may be calculated at a point of time when the target density is set.

Then, an actual monochromatic density corresponding to the actual tone values is calculated based on a corresponding relationship set in advance between tone values and monochromatic densities. As a method of determining an actual monochromatic density from actual tone values, a map or a table which represents a relationship between monochromatic densities and tone values may be prepared such that the actual tone values are applied to the map or the table. More simply, the relationship described above may be approximated using the known Yule-Nielsen expression to calculate the actual monochromatic density. Meanwhile, a target monochromatic density corresponding to the target tone values is calculated based on the corresponding relationship described above between tone values and monochromatic densities. Different from the actual monochromatic density, the target monochromatic density need not be calculated every time, and it is sufficient to calculate the target monochromatic density once unless the target tone values vary. For example, the target monochromatic density may be calculated at a point of time when the target tone values are set.

Then, a solid density difference corresponding to a difference between the target monochromatic density and the actual monochromatic density under the target tone values is calculated based on a corresponding relationship set in advance among tone values, monochromatic densities and solid densities. As a method of determining the solid density difference, a map or a table which represents the corresponding relationship described above is prepared, and then the target tone values, target monochromatic density and actual monochromatic density are applied to the map or table. More simply, the relationship described above may be approximated using the known Yule-Nielsen expression to calculate the solid density difference. Then, the ink supplying amount is adjusted for each of the ink supplying unit widths based on the calculated solid density difference and the ink supplying amount for each color is controlled for each of the ink supplying unit widths. The adjustment amount of the ink supplying amount based on the solid density difference can be calculated simply using the known API (Auto Preset Inking) function.

According to such a picture color tone controlling method as described above, since color tone control can be performed using not a spectrometer but an IRGB densitometer, the cost required for the measuring system can be reduced, and besides the picture color tone controlling method can be applied sufficiently also to a high speed printing press such as a rotary press for newspapers.

Meanwhile, as a technique for setting a target density where kcmy tone value data of a printing object picture (for example, image data for plate making or the like) can be acquired from the outside (for example, a printing requesting source or the like), the following technique has been proposed.

First, the acquired image data (kcmy tone value data) are used to set a noticed pixel (a noticed pixel may be a single pixel or a plurality of contiguous pixels in a mass) corresponding to each of ink colors for each ink supplying unit width from among pixels which form the printing object picture. Then, the tone values of the noticed pixel are converted into a density based on a corresponding relationship set in advance between tone values and densities. Then, the density of the noticed pixel is set as a target density, and the actual density of the set noticed pixel is measured.

According to the proposed technique, since color can be estimated in a unit of a pixel by utilizing the database of Japan Color (ISO12642) or the like, color tone control can be performed for a particular noticed point (noticed pixel) of the picture at a point of time immediately after printing is started without waiting for an OK sheet to be printed. It is to be noted that the kcmy tone value data may be bitmap data of the printing object picture (for example, data for 1 bit-Tiff plate making). Or, low resolution data corresponding to CIP3 data obtained by conversion of such bitmap data may be used alternatively.

It is to be noted that, as a setting method of a noticed point (noticed picture), a method is available wherein an image of a printing picture is displayed on a display apparatus such as a touch panel using bitmap data such that an operator may designate a noticed point arbitrarily. Also a method has been proposed wherein a pixel having a maximum density sensitivity, or a pixel having a maximum autocorrelation to the tone values, is automatically extracted for each ink color through calculation and is set as a noticed pixel. In a particular setting method of a noticed pixel, an autocorrelation sensitivity H is introduced such that a pixel having a maximum autocorrelation sensitivity H is calculated as a pixel having a maximum autocorrelation and is set as a noticed pixel. For example, the autocorrelation sensitivity Hc to cyan can be represented, using pixel area ratio data (c, m, y, k), as "$Hc = C^n / (C + m + y + k)$" and a pixel having a maximum value of the autocorrelation sensitivity Hc is set as a noticed point of cyan (p: for example, an exponentiation of the autocorrelation of approximately 1.3 is selected).

If a pixel having a maximum autocorrelation with regard to tone values is extracted through calculation and set as a noticed pixel for each ink color and a target monochromatic density and an actual monochromatic density are calculated with regard to the noticed pixel and then the ink supplying amount is feedback controlled so that the actual monochromatic density may approach the target monochromatic density in such a manner as described above, then stabilized color tone control can be achieved. Patent Document 1: Japanese Patent Laid-Open No. 2001-18364

Patent Document 2: Japanese Patent Laid-Open No. 2001-47605
Patent Document 3: Japanese Patent Laid-Open No. 2004-106523

DISCLOSURE OF THE INVENTION

SUBJECT TO BE SOLVED BY THE INVENTION

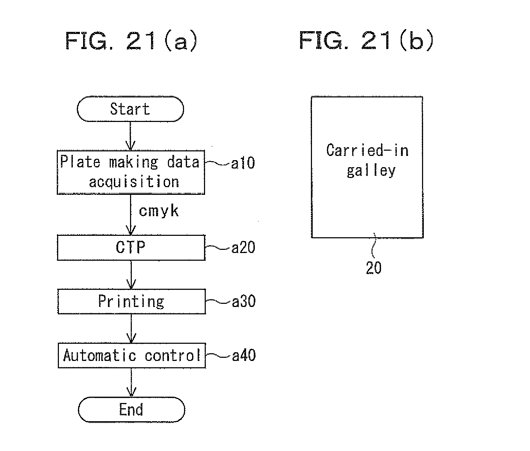

Incidentally, where the technique of Patent Document 3 described above is utilized, a process after an order for printing is received until printing is completed can be carried out, for example, in such a manner as illustrated in FIG. 21(a).

Referring to FIG. 21(a), plate making data (including kcmy tone value data described hereinabove) are acquired first (step a10). Then, plate making is carried out from the kcmy tone value data of the plate making data by CTP (Computer to Plate) (step a20). Then, the plate produced is attached to a rotary press to start printing (step a30). Upon printing, the automatic control of the color tone disclosed in Patent Document 3 is carried out (step a40). In particular, based on the acquired image data (kcmy tone value data), a noticed pixel corresponding to each ink color is set for each ink supplying unit width from among pixels which compose a printing target picture, and tone values of the noticed pixels are converted into densities based on a corresponding relationship set in advance between tone values and densities (color mixture halftone densities) and the densities of the noticed pixels are set as target densities. When, a target tone value of each ink color corresponding to each of the target densities is determined, and a target monochromatic density (target monochromatic halftone density) corresponding to the target tone value is determined. Upon printing, the actual density of each noticed pixel is measured and the actual tone value of each ink color corresponding to the actual density is determined, and then the actual monochromatic density corresponding to the actual tone value is determined and the solid density difference corresponding to the difference between the target monochromatic density and the actual monochromatic density under the target tone value is determined. Then, the ink supplying amount is adjusted for each ink supplying unit width based on the determined solid density difference to control the supplying amount of the ink of each color for each supplying unit width.

However, for example, in the case of printing of an advertisement portion in newspaper printing or the like, a print sample (so-called "color galley" or "carried-in galley", refer to FIG. 21(b)) 20 is carried in from a customer and it is sometimes asked to print in a color tone same as the print sample. Although also an actual product (here, a newspaper advertisement) is printed based on plate making data same as those used by such a print sample as described above, frequently the color tone of the printing product does not coincide with the color tone of the print sample.

It is considered that this arises from the fact that, for printing of a sample, a flatbed press (flatbed proof press), a sheet-fed printing press or a DDCP (Direct Digital Color Proof) or a like machine is generally used, but when an actual product (newspaper advertisement) is printed, a printing press (newspaper rotary press) different from the machine used for printing of the sample is used. In particular, in the case of a flatbed press, since printing is carried out at a low speed, ink is transferred readily and a color representation in a wide color space can be obtained. In contrast, in a newspaper rotary press or a like machine, since printing is carried out at a very high speed, ink is transferred less easily than with the flatbed printing press and also the color space which can be represented is narrowed.

Further, it is not easy to establish the same conditions of the ink, print paper and so forth to be used between sample printing and product printing, and also they make factors of displacing the color tone of the product from that of the sample.

Therefore, it is necessary for the conditions of the ink, print paper and so forth, which are to be used for sample printing and product printing, to approach each other. Nevertheless, from a difference between the printing presses, when a product is printed by standard ink supply, the color tone of the product is likely to be displaced from the color tone of the sample.

If the color tone of the product does not coincide with the color tone of the sample, then usually it is necessary to interrupt starting control once and necessary for the operator to adjust the ink supplying state manually so that the color tone of a product may coincide with the color tone of the sample through visual observation thereby to carry out color adjustment.

It is to be noted that, in the description above, the color tone of a print product is adjusted to that of the sample (carried-in galley) carried in by a customer. However, also where the color tone of a print product by a certain printing press is adjusted to the color tone of a print product by a different printing press, an operation similar to that described above is sometimes required.

For example, in the case of newspaper printing (particularly printing of newspapers to be delivered over a wide area such as nationwide newspapers), a reference rotary press which is used as a reference to printing of the newspaper company is installed in a base such as the head office, and a printing factory including a rotary press (factory rotary press) is arranged in various districts. Thus, printing data (including plate making data) are sent from the base to the printing factories in the districts such that plate making and printing are carried out in the individual districts thereby to reduce the time required for delivery of newspapers so that comparatively new information (news information whose deadline is comparatively late) can be conveyed to newspaper readers in the districts.

Also in this instance, it is necessary to adjust the color tone of a newspaper printing field to be printed by the factory rotary presses to the color tone of the newspaper printing field printed by the reference rotary press. Since both of the reference rotary press and the factory rotary presses are newspaper rotary presses, although the difference in printing characteristic between them is smaller than that between a newspaper rotary press and a flatbed printing press, if printing press models are different, then also printing characteristics (for example, material conditions of used blankets and so forth) are different naturally. Further, the printing presses individually have unique printing characteristics (machine setting conditions such as, for example, printing pressures), and even if the types of the printing presses are same, the printing characteristics are sometimes different. Further, even if the printing characteristics of the printing presses themselves are same, if different types of paper are used for printing, then also printing characteristics (material conditions) are different.

Accordingly, even if similar printing plates are produced based on plate making data similar to those for the reference rotary press and are used for printing in the printing factories, printed matters obtained by printing by the factory printing presses are not likely to have a color tone similar to the color tone of printed matters obtained by printing by the reference printing press. Thus, if the print color tone by the factory rotary presses does not coincide with the print color tone by the reference rotary press, then color adjustment by the operator is required similarly as in the case described hereinabove.

Further, where color adjustment by adjustment of the ink supplying amount is carried out, the color adjustment can be carried out for each supplying zone of ink (ink supplying unit). However, it is necessary to take not only the color tone for each ink supplying zone but also the color tone balance between adj acent ink supplying zones or over an entire page into consideration.

In recent years, the demand for increase of color pages and the print color tone is becoming severe, and together with this, a situation wherein such color adjustment by an operator as described above is required is increasing. This results in failure to promote labor saving in printing and results also in production of broke until the color adjustment by the operator is completed, and gives rise to increase of the cost.

In order to suppress the amount of such broke, accurate color adjustment must be completed in a short period or time, and a sufficient experience and a keen sense are required for the operator. This imposes a significant burden on the operator.

It is an object of the present invention to provide a printing simulation method and apparatus, a picture color tone controlling method and method for a printing press and a printing press by which, before printing is carried out, the color tone can be confirmed readily so that a demand for a print color tone can be satisfied precisely while appearance of broke is suppressed.

MEANS FOR SOLVING THE SUBJECTS

In order to achieve the object described above, according to an aspect of the present invention, there is provided a printing simulation method comprising a printing picture displaying step of acquiring a printing characteristic of a printing press to be used for printing and data of a printing picture to be printed by the printing press and displaying, on a monitor screen, an image of the printing picture obtained by simulating color by the printing press with the data of the printing picture converted using the printing characteristic of the printing press, and a color correction step of carrying out, while a sample of the printing picture is referred to, color correction state of the picture displayed on the monitor screen with respect to a density of an ink color upon printing so that a color tone of the picture displayed on the monitor screen approaches a color tone of the sample picture.

Preferably, the sample of the printing picture to be referred to at the color correction step is an actually printed sample. Preferably, the sample of the printing picture to be referred to at the color correction step is an image fetched from an actually printed sample by a scanner and displayed on the monitor screen.

Preferably, the sample of the printing picture to be referred to at the color correction step is an image of the printing picture obtained by simulating color by a printing press different from the printing press to be used for printing with the data of the printing picture converted using a printing characteristic of the different printing press and displayed on the monitor screen.

In this instance, preferably the color by the different printing press is color where an ink supplying amount is determined as a reference value.

Or preferably the printing picture displaying step and the color correction step are carried out in advance with regard to the different printing press, and the color by the different printing press is color corrected at the color correction step.

Preferably, at the color correction step, a second color coordinate value which is a color coordinate value of the image obtained by simulating the color by the printing press to be used for printing and displayed on the monitor screen is corrected so that a distance between a first color coordinate value which is a color coordinate value of the sample image displayed on the monitor screen and the second color coordinate value is minimized to carry out the correction of the color state.

In this instance, preferably, at the color correction step, a specific region portion is noticed for each ink supplying unit width region to correct the second color coordinate value so as to minimize an average value in distance between the first and second color coordinate values of pixels in the specific region portion.

Preferably, the printing characteristic is an ICC profile for each ink supplying unit width.

In this instance, preferably the ICC profile is given by a calculation expression. Or preferably, the ICC profile is a database of corresponding values of various combinations.

According to another aspect of the present invention, there is provided a picture color tone controlling method for a printing press, comprising a printing picture displaying step of acquiring a printing characteristic of a printing press to be used for printing and data of a printing picture to be printed by the printing press and displaying, on a monitor screen, an image of the printing picture obtained by simulating color by the printing press with the data of the printing picture converted using the printing characteristic of the printing press, a color correction step of carrying out, while a sample of the printing picture is referred to, color correction state of the picture displayed on the monitor screen with respect to a density of an ink color upon printing so that a color tone of the picture displayed on the monitor screen approaches a color tone of the sample picture, a target density setting step of setting, based on the color state corrected at the color correction step, a target density which is a target value of color, when printing is carried out by the printing press, and a printing controlling step of detecting an actual density which is an actual value of the color of a printing result by the printing press and carrying out printing while controlling an ink supplying state by an ink supplying apparatus so that the actual density approaches the target density set at the target density setting step.

Preferably, the printing press is a multi-color printing press, and, at the target density setting step, a noticed pixel region which is noticed as a target of color tone control in the printing picture is set in advance for each ink supplying unit width and the target density which is a target density of the color when printing is carried out by the printing press is set based on the color state of the set noticed pixel region, and the printing controlling step includes an actual density measurement step of measuring an actual density of each noticed pixel region of an actually printed sheet obtained by printing using an IRGB densitometer, a target tone value calculation step of calculating a target tone value of each ink color corresponding to the target density based on a corresponding relationship between a tone value and a density set in advance, an actual tone value calculation step of calculating an actual tone value of each ink color corresponding to the actual density based on the corresponding relationship between the tone value and the density, a target monochromatic density calculation step of calculating a target monochromatic density corresponding to the target tone value based on a corresponding relationship between the tone value and a monochromatic density set in advance, an actual monochromatic density calculation step of calculating an actual monochromatic density corresponding to the actual tone value based on the corresponding relationship between the tone value and the monochromatic density, a solid density difference calculation step of calculating a solid density difference corresponding to a difference between the target monochromatic density and the actual monochromatic density under the target tone value based on a corresponding relationship among the tone value, the monochromatic density and a solid density set in advance, and an ink supplying amount adjustment step of adjusting an ink supplying amount for each ink supplying unit width of an ink supplying apparatus based on the solid density difference.

Preferably, at the color correction step, the correction of the ink supplying amount is simulated to carry out correction of the color state of the monitor screen, the picture color tone controlling method further comprising an ink supplying amount preset step of setting, before the printing controlling step is started, the ink supplying amount to an amount of the state corrected in advance for each ink supplying unit width based on the correction of the ink supplying amount simulated at the color correction step.

According to a further aspect of the present invention, there is provided a printing simulation apparatus comprising a displaying section for displaying, on a monitor screen, an image of a printing picture obtained by simulating color by a printing press to be used for printing with data of the printing picture converted using a printing characteristic of the printing press, and a color correction section for correcting a color state of the image of the printing picture displayed on the moni tor screen with respect to a density of an ink color upon printing.

Preferably, the printing simulation apparatus further comprises color information outputting section for outputting information of the corrected color state.

Preferably, the printing simulation apparatus further comprises an operation section for operating correction of the color state.

Preferably, the image of the printing picture is an image obtained by fetching an actually printed sample by a scanner and displayed on the monitor screen. Or preferably, the image of the printing picture is an image of the printing picture obtained by simulating color by a printing press different from the printing press to be used for printing with the data of the printing picture converted using a printing characteristic of the different printing press and displayed on the monitor screen.

In this instance, preferably the color by the different printing press is color where an ink supplying amount is determined as a reference value.

Or preferably, the color by the different printing press is color corrected by the color correction section with regard to the different printing press.

Preferably, the color correction section includes an automatic correction section for automatically correcting the color state so that a distance between a first color coordinate value which is a color coordinate value of an image displayed on the monitor screen and a second color coordinate value which is a color coordinate value of the image obtained by simulating the color by the printing press to be used for printing and displayed on the monitor screen is minimized.

In this instance, preferably the automatic correction section of the color correction section notes a specific region portion for each ink supplying unit width region and automatically corrects the color state so as to minimize an average value in distance between the first and second color coordinate values of pixels in the specific region portion.

Preferably, the printing characteristic is an ICC profile for each ink supplying unit width.

In this instance, preferably the ICC profile is given by a calculation expression. Or preferably, the ICC profile is a database of corresponding values of various combinations.

According to a still further aspect of the present invention, there is provided a printing simulation apparatus for a printing press, comprising a displaying section for displaying, on a monitor screen, an image of a printing picture obtained by simulating color by a printing press to be used for printing with data of the printing picture converted using a printing characteristic of the printing press, a color correction section for correcting a color state of the image of the printing picture displayed on the monitor screen with respect to a density of an ink color upon printing, a color information outputting section for outputting information of the corrected color state, a target density setting section for setting, based on the information of the color state outputted from the color information outputting section, a target density which is a target value of color when printing is carried out by the printing press, a detection section for detecting an actual density which is an actual value of color of a printed picture, and a controlling section for feedback controlling an ink supplying state by an ink supplying apparatus so that the actual density detected by the detection section approaches the target density set by the target density setting section.

Preferably, the target density setting section sets a noticed pixel region to be noticed as a target for color tone control in the printing picture in advance for each ink supplying unit width and notices the noticed pixel region to set the target density based on information of the color state of the set noticed pixel region.

Preferably, the printing press is a multi-color printing press, and the controlling section includes a target tone value calculation section for calculating a target tone value of each ink color corresponding to the target density based on a corresponding relationship between a tone value and a density set in advance, an actual tone value calculation section for calculating an actual tone value of each ink color corresponding to an actual tone density based on a corresponding relation ship between the tone value and the density, a target monochromatic density calculation section for calculating a target monochromatic density corresponding to the target tone value based on a corresponding relationship between the tone value and a monochromatic density set in advance, an actual monochromatic density calculation section for calculating an actual monochromatic density corresponding to the actual tone value based on the corresponding relationship between the tone value and the monochromatic density, a solid density difference calculation section for calculating a solid density difference corresponding to a difference between the target monochromatic density and the actual monochromatic density under the target tone value based on a corresponding relationship among the tone value, the monochromatic density and a solid density set in advance, and an ink supplying amount adjustment section for adjusting an ink supplying amount for each ink supplying unit width of an ink supplying apparatus based on the solid density difference.

Preferably, the controlling section includes an ink supplying amount preset section for presetting the ink supplying amount for each ink supplying unit width based on the information of the color state from the color information outputting section.

According to a yet further embodiment of the present invention, there is provided a printing press comprising an ink supplying apparatus capable of adjusting an ink supplying amount for each ink supplying unit width, a displaying section for displaying, on a monitor screen, an image of a printing picture obtained by simulating color by the printing press with data of the printing picture converted using a printing characteristic of the printing press to be used for printing, a color correction section for correcting a color state of the image of the printing picture displayed on the monitor screen with respect to a density of an ink color upon printing, a color information outputting section for outputting information of the corrected color state, a target density setting section for setting, based on the information of the color state outputted from the color information outputting section, a target density which is a target value of color when printing is carried out by the printing press, a detection section for detecting an actual density which is an actual value of color of a printed picture, and a controlling section for feedback controlling an ink supplying state by an ink supplying apparatus so that the actual density detected by the detection section approaches the target density set by the target density setting section.

EFFECTS OF THE INVENTION

With the printing simulation method and apparatus, the picture color tone controlling method and apparatus for a printing press and the printing press, an image of a printing picture obtained by simulating color by the printing press is displayed on the monitor screen, and while a sample of the printing picture is referred to, a color state of the picture displayed on the monitor screen is corrected with respect to a density of an ink color upon printing so that a color tone of the picture image displayed on the monitor screen approaches a color tone of the sample picture.

Accordingly, a target density can be set based on the corrected color state, and printing can be carried out while the ink supplying state by the ink supplying apparatus is controlled so that, while an actual density printed by the printing press is detected, the color tone of the picture image displayed on the monitor screen may approach the target density set by the target density setting step.

At this time, if information of the corrected color state is outputted, then the target density which is a target value of the color when printing is to be carried out by the printing press can be set readily based on the outputted information of the target density.

Consequently, before actual printing is carried out, the target value (target density value) of color tone control of a picture to be printed by the printing press can be adjusted to a value conforming to the color tone of the sample picture, and while appearance of broke is suppressed, a demand for a printing color tone can be satisfied appropriately. Particularly, in comparison with a case wherein the color tone is checked when actual printing is being carried out, the psychological pressure to the operator is reduced and the color matching cab be carried out rapidly and appropriately.

Where an actually printed sample (carried-in galley) is used as the sample of the printing picture to be referred to, color matching prior to printing can be carried out simply and easily. However, where the sample of the printing picture is an image produced by fetching the actually printed sample and displaying the sample on the monitor screen, color matching can be carried out while the images displayed on the monitor screen are compared with each other. Consequently, the color matching can be carried out appropriately.

Where it is intended to cause the color tone of the printing picture to approach a printing color tone obtained by a different printing press, if the sample of the printing picture to be referred to is the image of the printing picture displayed on the monitor screen by simulating the color in accordance with the printing characteristic of the different printing press, then the color matching can be carried out more appropriately. For example, if the present invention is applied to a case wherein, in newspaper printing, it is intended to cause the color tone of the printing picture by a rotary press (target rotary press) which is actually used for printing such as other rotary presses in different factories or the like to approach the printing color tone obtained by the reference rotary press, then the color tone of printing pictures to be printed at the different places can be caused to approach the color tone of the reference rotary press in advance. Particularly where the printing picture of, the target of the color matching is a newspaper advertisement or the like, different from news articles or the like, data of the printing picture can be acquired with a sufficient margin in time prior to starting of printing, and therefore, the operator can afford to carry out color matching and can carry out color matching appropriately and readily.

It is to be noted that, where the color by a printing press to be used for printing is simulated, data of the printing picture are used to convert the printing characteristic (for example, an ICC profile) of the printing press to be used for printing so that the data are displayed on the monitor screen with the ink supplying amount of each color set to the reference value (reference solid density). However, also where the color according to the printing characteristic of a different printing press is simulated to display the data of the printing picture on the monitor screen, the data of the printing picture are used to convert the printing characteristic (for example an ICC profile) of the different printing press so as to be displayed on the monitor screen.

In this instance, if the picture where it is printed with the reference ink supplying amount by the different printing press is used as the reference, then the printing picture where the ink supplying amount by the different printing press is used as the reference value (reference solid density) may be displayed on the monitor screen. On the other hand, if the ink supplying amount preset value for adjustment to a printing sample for the different printing press is obtained in advance, then color correction may be carried out in advance on the different printing press such that the corrected color is displayed as the color of the different printing press on the monitor screen.

By such measures as described above, the picture by the printing press to be used for printing can be color-matched with the printing sample of the different printing press.

It is to be noted that, if the operation section for operating the correction of the color state is provided, then the operator can carry out correction to a better color state.

Further, where the second color coordinate value which is a color coordinate value of the image obtained by simulating the color by the printing press to be used for printing and displayed on the monitor screen is corrected so that the distance between the first color coordinate value which is a color coordinate value of the image displayed on the monitor screen and the second color coordinate value is minimized to carry out the correction of the color state, the color matching can be carried out without relying upon the operator.

In this instance, where the specific region portion is noticed for each ink supplying unit width region to correct the second color coordinate value, automatic color matching which does not rely upon the operator can be carried out in a well-balanced state in accordance with a color tone request.

It is to be noted that, where an ICC profile is used as the printing characteristic of the printing press, if the ICC profile is given as a calculation expression, then while the burden for production of a database is moderated, calculation time is required depending upon the calculation speed upon use. However, where the ICC provided is given as a database, while the burden for production of the database is imposed, only a search is required upon use, and therefore, good responsibility upon use can be assured.

Further, where a noticed pixel region which is noticed as a target of color tone control in the printing picture is set in advance for each ink supplying unit width and the target density is set based on the color state of the set noticed pixel region and then, upon printing, an actual density of each noticed pixel region of an actually printed sheet obtained by printing is measured using an densitometer and a target tone value of each ink color corresponding to the target density and an actual tone value of each ink color corresponding to the actual density are calculated based on a corresponding relationship between a tone value and a density set in advance, whereafter a target monochromatic density corresponding to the target tone value and an actual monochromatic density corresponding to the actual tone value are calculatedbased on a corresponding relationship between the tone value and a monochromatic density set in advance and a solid density difference corresponding to a difference between the target monochromatic density and the actual monochromatic density under the target tone value is calculated based on a corresponding relationship among the tone value, the monochromatic density and a solid density set in advance and then an ink supplying amount is adjusted based on the solid density difference, the printing color tone of the actual print can be controlled appropriately to the target state.

Where the correction of the ink supplying amount is simulated to carry out correction of the color state of the monitor screen and, before the printing is started, the ink supplying amount is set to an amount of the state corrected in advance for each ink supplying unit width based on the correction of the simulated ink supplying amount for the color, broke can be further reduced.

The above and other objects, features and advantages of the present invention will become apparent from the following description and the appended claims, taken in conjunction with the accompanying drawings in which like parts or elements are denoted by like reference characters.

BRIEF DESCRIPTION OF THE DRAWINGS

FIG. 1 is a diagrammatic view showing a printing system according to a first embodiment of the present invention;
FIGS. 2(a), 2(b) and 2(c) are views showing a monitor of a printing simulation apparatus according to the first embodiment of the present invention;
FIG. 3 is a view showing a carried-in galley according to the first embodiment of the present invention;
FIG. 4 is a schematic diagrammatic view showing a configuration of a printing simulation apparatus according to the first embodiment of the present invention;
FIG. 5 is a flow chart illustrating a procedure of a printing simulation according to the first embodiment, of the present invention;
FIG. 6 is a view schematically showing a general configuration of an offset rotary press for newspapers according to the first embodiment of picture color tone control of the present invention;
FIG. 7 is a functional block diagram illustrating a color tone controlling function of a calculation apparatus and illustrating a monitor of the printing system of FIG. 1 according to the first embodiment of the present invention;
FIG. 8 is a flow chart illustrating a processing flow of color tone control by the calculation apparatus of FIG. 6;
FIG. 9 is a view illustrating expansion of a color space according to the first embodiment of the present invention;
FIG. 10 is a view showing a corresponding relationship between tone values and densities according to the first embodiment of the present invention;
FIG. 11 is a map illustrating a corresponding relationship of a monochromatic density with the tone values;
FIG. 12 is a map illustrating a corresponding relationship of a solid density with the tone values and the monochromatic density;
FIG. 13 is a schematic view showing pictures and image displays according to a second embodiment of the present invention;
FIG. 14 is a schematic view showing a configuration of a printing simulation apparatus according to the second embodiment of the present invention;
FIG. 15 is a flow chart illustrating a procedure of a printing simulation according to the second embodiment of the present invention;
FIG. 16 is a schematic view showing pictures and image displays according to a third embodiment of the present invention;
FIG. 17 is a schematic view showing a configuration of a printing simulation apparatus according to the third embodiment of the present invention;
FIG. 18 is a flow chart illustrating a procedure of a printing simulation according to the third embodiment of the present invention;
FIG. 19 is a view showing a picture for illustrating production of an ICC profile;
FIGS. 20 (a) and 20 (b) are flow charts illustrating production of an ICC profile; and
FIGS. 21 (a) and 21 (b) are a flow chart and a schematic view of a carried-in galley illustrating a prior art.

EXPLANATION OF REFERENCES

| 1 | plate making side CTP server of a customer |
|---|---|
| 2 | quality controlling apparatus image server |
| 3 | operation terminal personal computer |
| 4 | CCS (computerized controlling system) personal compute |
| 5 | quality controlling apparatus |
| 6 | a newspaper rotary press (offset rotary press for newspaper, also simply referred to as printing press |
| 7 | printing simulation apparatus (picture color tone controlling printing simulation apparatus) |
| 7a | monitor unit |
| 7b | a calculation apparatus |
| 8 | printing automatic controlling apparatus |
| 9 | scanner |
| 10 | web |
| 11 | paper supplying station |
| 12 | printing station |
| 12a, 12b, 12c, 12d | printing unit |
| 13 | web pass station |
| 14 | folding machine |
| 15 | paper delivery station |
| 16 | IRGB densitometer (detection section) |
| 17 | rotary press controlling apparatus |
| 23 | blanket cylinder |
| 24 | printing cylinder |
| 25 | ink roller group |
| 26 | ink fountain roller |
| 27 | ink key |
| 28 | printing sheet |
| 31 | DSP |
| 32 | PC |
| 34 | color conversion section |
| 35 | ink supplying amount calculation section |
| 36 | online control section |
| 37 | key opening limiter calculation section |

BEST MODE FOR CARRYING OUT THE INVENTION

In the following, embodiments of the present invention are described with reference to the drawings.

[First Embodiment]

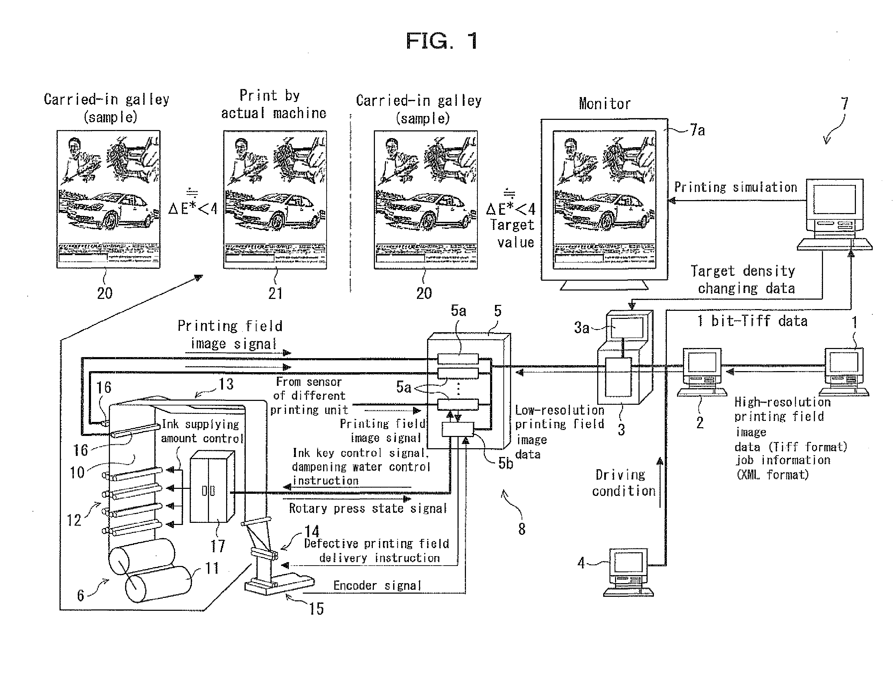

First, a first embodiment of the present invention is described with reference to FIGS. 1 to 12.
In the present embodiment, taking a printing characteristic of a printing press to be used for printing into consideration, a color situation of a printing target picture which may be obtained by a using printing press is simulated and a result of the simulation is displayed on a monitor screen, and the color on the monitor screen is adjusted while referring to a sample of the printing picture, that is, a carried-in galley so that the color tone of the on the displayed screen image approaches the color tone of the carried-in galley and then a target value of the color tone upon printing is set in response to the adjustment amount at this time. Here, the present embodiment is described taking a newspaper printing system as an example.

[Configuration of the Newspaper Printing System]

As shown in FIG. 1, a printing system according to the present embodiment includes a quality controlling apparatus image server 2 to which printing data is transmitted from a plate making side CTP server 1 of a customer, an operation terminal personal computer 3 connected to the quality controlling apparatus image server 2, a CCS (computerized controlling system) personal computer 4 of a rotary press side management system connected to the quality controlling apparatus image server 2 and the operation terminal personal computer 3, a quality controlling apparatus 5 connected to the operation terminal personal computer 3, a newspaper rotary press (offset rotary press for newspaper, hereinafter referred to sometimes as printing press) 6 which is connected to the quality controlling apparatus 5 and whose operation is controlled by the quality controlling apparatus 5, and a printing simulation apparatus (picture color tone controlling printing simulation apparatus) 7 which is connected to the quality controlling apparatus image server 2 and the operation terminal personal computer 3 and simulates printing by the newspaper rotary press 6.

It is to be noted that the newspaper rotary press 6 according to the present embodiment corresponds to a reference rotary press installed as a rotary press, which is a reference of printing of a newspaper company, in a base such as the head office or the like.

First, the newspaper rotary press 6 is described. The newspaper rotary press 6 in the present embodiment is a multi-color double-sided printing press and includes a paper supplying station 11, an in-feeding section (not shown), a printing station 12, a web pass station 13, a folding machine 14, and a paper delivery station 15. On the newspaper rotary press 6, printing on a web (continuous paper, hereinafter referred to sometimes as printing sheet) 10 supplied from the paper supplying station 11 is carried out in the printing station 12, and the web 10 is fed through the web pass station 13, cut and folded by the folding machine 14 and then delivered by the paper delivery section 15. The printing station 12 includes an IRGB densitometer (detection section) 16 for detecting an actual density (actual color mixture halftone density) as a color state of a picture at a printing portion of traveling web 10 and a rotary press controlling apparatus 17 for controlling an ink supplying amount (in particular, an ink key) and moisture water in the printing station 12.

The quality controlling apparatus image server 2 receives high-resolution printing field image data in the Tiff format and job information in the XML format as printing data transmitted from the CTP server 1 on the plate making side of a customer and converts the printing field image data into data of a predetermined standard (for example, CIP 4 standard) which can be handled by the printing press. It is to be noted that, though not shown, a printing plate is produced by CTP based on the paper face image server from the customer plate making side CTP server 1.

The operation terminal personal computer 3 is a machine for carrying out presetting and controlling of an ink supplying amount based on the printing field image data and the job information of the predetermined standard of a result of the conversion by the quality controlling apparatus image server 2 and is used for carrying out monitoring, instruction and so forth by an operator when color tone control hereinafter described is carried out by adjustment of the ink supplying amount. Particularly, the operation terminal personal computer 3 includes a touch display unit 3a, and the operator can carry out instruction and so forth while watching a screen image of the touch display unit 3a.

The CCS personal computer 4 is provided in a management system on the rotary press side and is a machine for carrying out a process regarding to what printing unit the printing field image data of the predetermined standard of a result of the conversion by the quality controlling apparatus image server 2 should be allocated, a process of inputting of a driving condition and so forth.

The quality controlling apparatus 5 carries out automatic control upon printing and includes a calculation apparatus 5a for calculating a control amount regarding color tone automatic control of each printing press based on a printing field image signal outputted from the IRGB densitometer 16 of each printing press. Particularly, the quality controlling apparatus 5 receives control amount information from each calculation apparatus 5a, a state signal of the rotary press and an encoder signal from the delivery station 15 and issues an ink key controlling signal, a moisture water controlling instruction and a defective printing field paper delivery instruction regarding the color tone automatic control to carry out various controlling processes.

It is to be noted that the operation terminal personal computer 3 can carry out various setting regarding the control by the quality controlling apparatus 5, and a printing automatic controlling apparatus 8 is configured from the operation terminal personal computer 3 and the quality controlling apparatus 5.

[Printing Simulation Apparatus]

The printing simulation apparatus 7 includes a monitor unit (display apparatus) 7a for displaying an image and a calculation apparatus 7b for calculating an image to be displayed on the monitor unit 7a. The calculation apparatus 7b is connected to the quality controlling apparatus image server 2 of the newspaper printing system, and converts the printing field image data of the predetermined standard obtained by the conversion from the quality controlling apparatus image server 2 using an ICC profile of the reference rotary press 6 and calculates display image information obtained by simulating a result of printing by the printing press 6 and then displays the display image information on the monitor unit 7a.

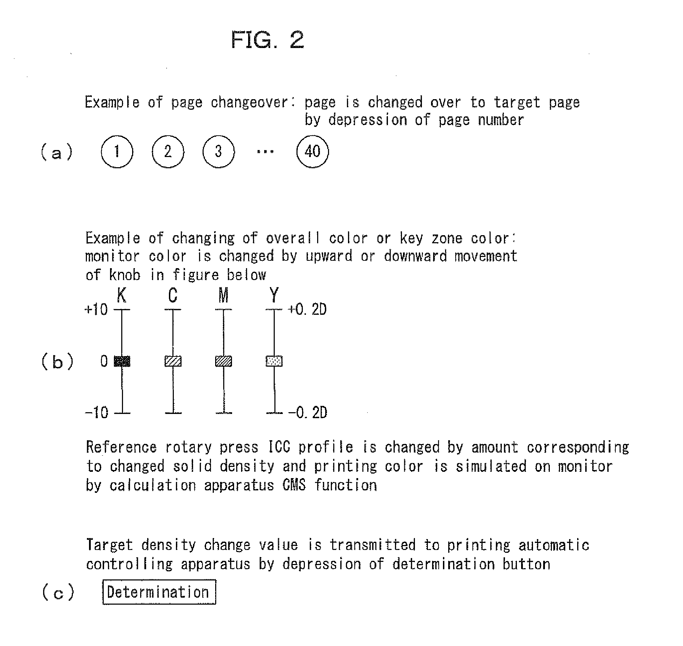

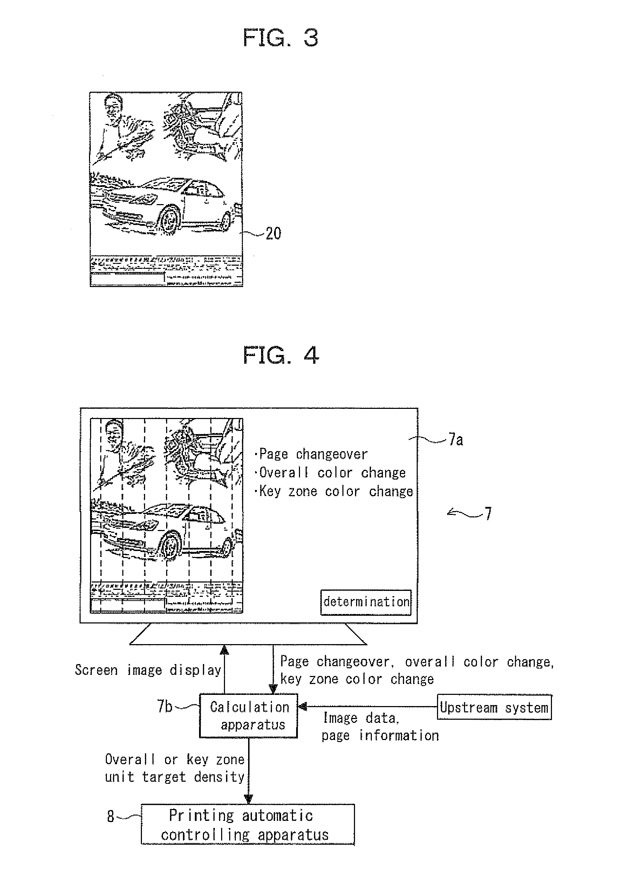

Further, the monitor unit 7a has not only the function for displaying the image obtained by simulating the printing result by the printing press 6 but also a function as a touch panel unit for selecting a display image and changing the color tone of the display image. In particular, as shown in FIGS. 2 and 4, a page number display [refer to FIG. 2(a)] for selecting a page of a picture (an article, a photograph, an advertisement or the like) to be printed, a volume key display [refer to FIG. 2(b)] for changing the color tone of the display screen and a determination button display [refer to FIG. 2(c)] can be selected. Further, all or some of the page number, volume key and determination button may be displayed at the same time.

As shown in FIG. 2(b), the volume key display includes four volume keys corresponding to ink colors of the printing press, that is, K (black), C (cyan), M (magenta) and Y (yellow), and the four volume keys are displayed in a juxtaposed relationship with each other. Thus, by touching with and moving any of the display panel volume keys on the monitor unit 7a, the color tone can be adjusted to a state of an ink supplying amount corresponding to the moved position of the volume key. By operating each volume key, the color tone of the display image on the monitor unit 7a corresponding to a density variation of each ink color where the supplying amount of the ink corresponding to the operated volume key is adjusted is changed.

In this example, each ink color can be adjusted with respect to a density (for example, a reference density) within a range of $\pm$ 0.2 D (D: density). Further, gradations (+ 10, - 10) are displayed in order to make it possible for the operator to recognize an adjustment level easily.

Further, in this instance, image display in response to the supplying amount of each ink can be carried out based on a corresponding relationship between the luminance of I, R, G and B on the screen of the monitor unit 7a and the densities of the four ink colors of K, C, M and Y.

It is to be noted that, while the supplying amount of each ink corresponds to a density (solid density) of the ink, in the present apparatus, auxiliary lines (broken lines shown on the display screen image of FIG. 4) corresponding to individual ink key zones are additionally displayed on the display screen image of the monitor unit 7a upon image display such that adjustment of the supplying amount of each ink can be carried out for each ink key zone of the printing press 6. Here, such a page number as shown in FIG. 2(a) is displayed on the monitor unit 7a together with starting of a printing simulation. Consequently, if any one of the buttons of the page numbers is pushed (touched), then a printing simulation image corresponding to the pushed button of the page number is displayed on the monitor unit 7a and the volume keys are displayed. Then, if one of the volume keys is operated, then the color tone of the displayed image is varied and, if the determination button is pushed (touched), then ink supplying amount adjustment information (simulation information of ink supplying amount adjustment) at this time is displayed.

[Setting of Color Correction and Target Density Value by Printing Simulation]

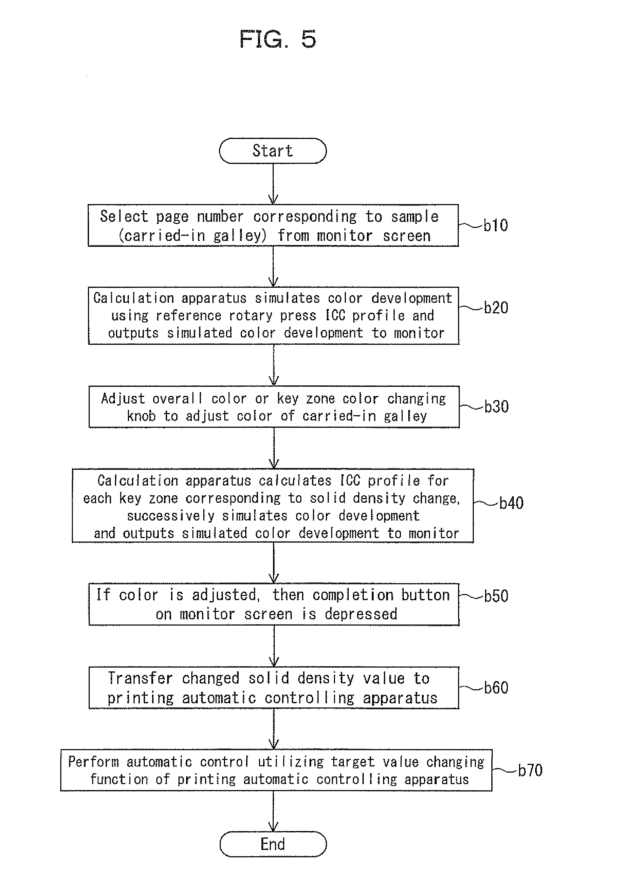

In the present embodiment, target density values (in particular, target color mixture halftone densities) $I_0$, $R_0$, $G_0$, $B_0$ when printing is to be carried out by the printing press 6 are set using such a printing simulation apparatus 7 as described above without carrying out actual printing. A procedure of setting of such target density values is described below with reference to FIG. 5.

In the present embodiment, such a printing sample (carried-in galley) 20 as shown in FIG. 3 is carried in from a customer in advance, and the operator would select a page number corresponding to the carried-in galley 20 from among the page numbers displayed on the monitor unit 7a (step b10). The calculation apparatus 7b simulates, regarding the selected page, a color state using an ICC profile of the reference rotary press 6 to display such a printing picture as shown in FIG. 4 on the monitor unit 7a (step b20: display step). Since the pertaining page is displayed in a color tone obtained by converting the ICC profile of the reference rotary press 6 using printing field image data in this manner, a result of printing by the printing press is displayed in simulation. It is to be noted that the color tone obtained by converting the ICC profile using the printing field image data naturally is a color tone where the ink supplying amount of the reference rotary press 6 is used as a standard state, that is, a color tone where a standard ink thickness is applied.

The operator would operate the volume keys while referring to the carried-in galley 20 so that the color tone of the page displayed on the monitor unit 7 a approaches that of the carried-in galley 20 to carry out color adjustment (color correction) (step b30: color correction step). The color adjustment is carried out regarding each color for each ink key zone, for example, while using an auxiliary line corresponding to an ink key zone displayed in addition to the image display.

At this time, the calculation apparatus 7b calculates, in response to a volume key operation, that is, in response to changing of the density (solid density) of ink, an ICC profile for each key zone and successively simulates color and then outputs a result of the simulation to the monitor unit 7a (step b40).

The operator would depress the determination button on the monitor screen if it is decided that the display color tone on the monitor unit 7a sufficiently approaches the color tone of the carried-in galley 20 (step b50). Consequently, ink supplying amount adjustment information (simulation information of ink supplying amount adjustment) at this time, that is, a changed solid density value for each ink color, is outputted to the printing automatic controlling apparatus 8 (operation terminal personal computer 3) (step b60). Then, the printing automatic controlling apparatus 8 sets target density values $I_0$, $R_0$, $G_0$, $B_0$ to be used when printing is to be carried out by the printing press 6 in response to the simulation information of the ink supplying amount adjustment (corresponding also to target value changing) and automatically controls the color tone (step b70: target density setting step and printing controlling step). This is hereinafter described.

It is to be noted that, although description is hereinafter given in the description of the picture color tone controlling method and apparatus for a printing press, a noticed picture region (sometimes referred to also as noticed point) which is a particular region in a printing picture may be set in advance such that the target density values $I_0$, $R_0$, $G_0$, $B_0$ are set based on the set noticed pixel region to carry out a process of color tone control.

Where the target density values are set based on the printing simulation in this manner, target density values conforming to the color characteristic can be set without carrying out actual printing. Besides, since the target density values can be set to values proximate to optimum values, printing with appropriate color can be carried out from the beginning of actual printing.

It is to be noted that ΔE* appearing in FIG. 1 represents an error in color between a color sample (here, the carried-in galley 20) and a pseudo print image or a main print based on a result of pseudo printing, and "4" of ΔE* < 4 represents the level of the error in color. Here, it is assumed that, as the numerical value decreases, the error decreases.

[Picture Color Tone Controlling Method and Apparatus for a Printing Press]

In the following, picture color tone control of a printing press which uses the pre-printing confirmation technique upon such target density change as described above is described.

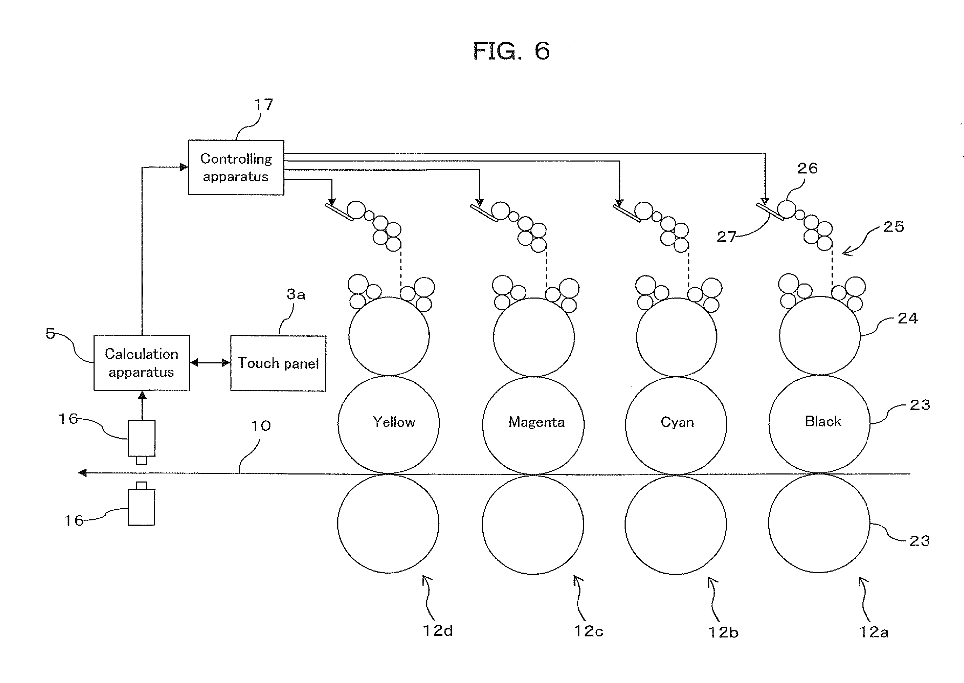

FIG. 6 is a view showing a general configuration of an offset rotary press for newspapers according to an embodiment of a picture color tone controlling method and apparatus for a printing press of the present invention. As described hereinabove, the offset rotary press for newspapers of the present embodiment is a double-sided printing press for multi-color printing and includes printing units 12a, 12b, 12c and 12d disposed for different ink colors [black (k), cyan (c), magenta (m) and yellow (y)] along a transport path of a printing sheet 10. In the present embodiment, each of the printing units 12a, 12b, 12c and 2d includes an ink supplying apparatus of the ink key type which includes a plurality of ink keys 27 and an ink fountain roller 26. In the ink supplying apparatus of the type described, the ink supplying amount can be adjusted by the gap amount (the gap amount is hereinafter referred to as ink key opening) of each of the ink keys 27 from the ink fountain roller 26. The ink keys 27 are juxtaposed in the printing widthwise direction, and the ink supplying amount can be adjusted in a unit of the width of each of the ink keys 27 (the ink supplying unit width by each ink key 27 is hereinafter referred to as key zone). The ink whose supplying amount is adjusted by each ink key 27 is kneaded to a suitable degree to form a thin film in an ink roller group 25 and then supplied to a printing surface of a printing cylinder 24. Then, the ink sticking to the printing face is transferred as a picture to the printing sheet 10 through a blanket cylinder 23. It is to be noted that, though not shown in FIG. 6, since the offset rotary press for newspapers of the present embodiment is for double-sided printing, each of the printing units 12a, 12b, 12c and 12d includes a pair of blanket cylinders 23, 23 disposed across the transport path of the printing sheet 10, and a printing cylinder 24 and an ink supplying apparatus are provided for each of the blanket cylinders 23.

The offset rotary press for newspapers includes a pair of line sensor type IRGB densitometers 16 on the further downstream of the most down stream printing units 12d. Each of the line sensor type IRGB densitometers 16 is a measuring instrument for measuring a color of a picture on the printing sheet 10 as reflection densities (color mixture halftone densities) of I (infrared radiation), R (red), G (green) and B (blue) on a line in the printing widthwise direction. The offset rotary press for newspapers can measure the reflection density over the overall printing sheet 10 or measure the reflection density at an arbitrary position of the printing sheet 10. Since the offset rotary press for newspapers is for double-sided printing, the line sensor type IRGB densitometers 16 are disposed on the opposite front and rear sides across the transport path of the printing sheet 10 so that they can measure the reflection density on the opposite front and rear faces of the printing sheet 10.

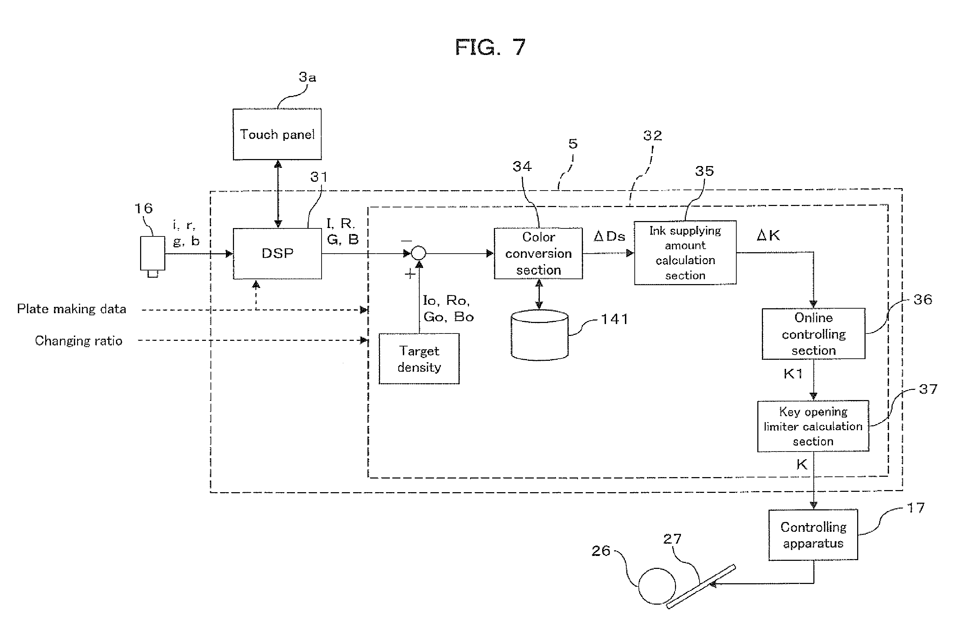

The reflection densities measured by the line sensor type IRGB densitometers 16 are transmitted to a calculation apparatus (quality controlling apparatus) 5. The calculation apparatus 5 is an apparatus for calculating control data of the ink supplying amount, and carries out calculation based on the reflection densities measured by the line sensor type IRGB densitometers 16 to calculate the opening of each of the ink keys 27 for making the color of the picture of the printing sheet 10 coincide with a target color. Here, FIG. 7 is a view showing a general configuration of a picture color tone controlling apparatus for the offset rotary press for newspapers according to the embodiment of the present invention and simultaneously is a functional block diagram showing the calculation apparatus 5 with attention paid to a color tone controlling function.

The calculation apparatus 5 includes a digital signal processor (DSP) 31 and a personal computer (PC) 32 disposed separately from the printing press. The PC 32 has functions as a color conversion section 34, an ink supplying amount calculation section 35, an online control section 36 and a key opening limiter calculation section 37 allocated thereto. It is to be noted that, if the performance of the personal computer is sufficiently high, then the DSP may not be used, and all of the functions of the calculation apparatus 5 may be implemented by the personal computer. Naturally, if quick processing is demanded, then the DSP may be suitably used. The line sensor type IRGB densitometers 16 are connected to the input side of the calculation apparatus 5, and the controlling apparatus (rotary press controlling apparatus) 17 built in the printing press is connected to the output side of the calculation apparatus 5. The controlling apparatus 17 functions as ink supplying amount adjusting means for adjusting the ink supplying amount for each of the key zones of the ink keys 27. The controlling apparatus 17 controls an opening/closing apparatus not shown for opening and closing each of the ink keys 27 and can adjust the key opening independently for each ink key 27 of each of the printing units 12a, 12b, 12c and 12d. Further, the touch panel 3a as a display apparatus is connected to the calculation apparatus 5.

The touch panel 3a can be used to display a printing surface of the printing sheet 10 whose image is picked up by the line sensor type IRGB densitometer 16 or a printing surface whose color is developed from plate making data and select an arbitrary region on the printing surface with a finger.

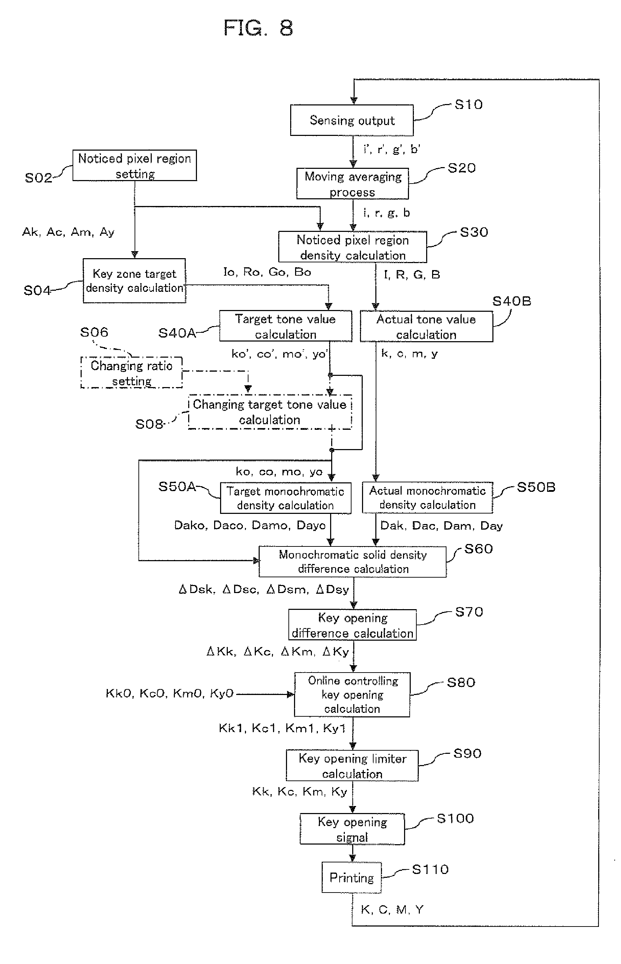

FIG. 8 is a view illustrating a processing flow of color tone control by the calculation apparatus 5. In the following, the processing substance of color tone control by the calculation apparatus 5 is described principally with reference to FIG. 8.

It is to be noted that, before the color tone control is performed, solid density values $Di(\lambda)$ of wavelengths $\lambda$ of I (infrared radiation), R (red), G (green), B (blue) are acquired from data obtained in advance by printing a color scale of the Japan Color (ISO12642) or the like in the standard density. In particular, a color scale of the Japan Color (ISO12642) or the like is printed in advance in the standard density using a printing press to be used, and the density is detected by the IRGB densitometer based on the printing result of the color scale. Consequently, the solid density value $Di(\lambda)$ of each color (each of monochromes and color mixtures of two, three or four colors) of the wavelength $\lambda$ can be acquired. As long as the characteristic of the printing press is not varied by secular degradation or the like, the solid density values $Di(\lambda)$ can be utilized after the determination is performed once.

Further, plate making data are inputted in advance to the calculation apparatus 5, and the calculation apparatus 5 acquires k, c, m, y data of each pixel from the plate making data in advance.

In the color tone control, after processes at steps S02 and S04 illustrated in FIG. 8 are performed, printing is started based on a result of the processes, and then, processes at steps other than steps S40A and S50A from among steps S10 to S110 are performed repetitively in a cycle set in advance. Basically, the processes at step S06 and S08 are carried out suitably by interruption for necessary ink color as occasion demands while the operator or the like confirms a printed matter after the printing is started. However, for example, if a phenomenon that the black becomes intensified every time is grasped, then also such a countermeasure as to perform suitable change before printing is sometimes taken. Further, it is necessary to carry out a process at step S40A only in a first control cycle after printing is started, but thereafter, the value obtained in the first controlling cycle is appropriated. It is necessary to carry out a process at step S50A only in the first control cycle when printing is started or when the processes at steps S06 and S08 are carried out, but thereafter, the value obtained at step S50A is appropriated.

First, a noticed pixel region (hereinafter referred simply also as noticed point) is set (step S02). Then, the process of the color tone control is performed based on the set noticed pixel region.

Automatic setting of the noticed pixel region is described. The DSP 31 of the calculation apparatus 5 selects a region having a high autocorrelation for each ink color from among kcmy tone value data obtained based on the plate making data, and the selected region is automatically set as the noticed pixel region corresponding to each ink color for each ink color.

It is to be noted that, while the plate making data are given as bitmap data, in order to set a noticed pixel region, although the bitmap data may be used as they are, here the bitmap data are converted into low-resolution data equivalent to CIP4 data according to the format of the printing press and then a process is performed in a unit of a pixel of a sensor described below.

In particular, the region having a high autocorrelation for each ink color is a region in which the autocorrelation sensitivity H has a value higher than a predetermined value set in advance and is a region of a pixel unit of the sensor (IRGB densitometer) 16. The pixel unit of the sensor is a minimum unit of the resolution of the sensor (IRGB densitometer) 16. In particular, a pixel group formed by collecting a great number of pixels of the plate making data corresponds to one pixel (one block) of the sensor pixel unit. For example, where the low-resolution data of the CIP4 are of 50.8 dpi and the resolution of 1 block of the sensor 16 is 25.4 dpi, a region of 2 pixels in the vertical direction by 2 pixels in the horizontal direction (in the pixel unit of the plate making data, 2 x 2 = 4 pixels) is one pixel unit of the sensor pixel unit.

The autocorrelation sensitivities H, for example, the autocorrelation sensitivity Hc of cyan, can be represented as "$Hc = c^n/(c + m + y + k)$" using pixel area ratio data (c, m, y, k). Where the value of the autocorrelation sensitivity Hc is compared with a reference autocorrelation sensitivity value (predetermined value) $H_0$ set in advance, if the value of the autocorrelation sensitivity Hc is higher than the reference autocorrelation sensitivity value $H_0$, then it is calculated that the region has a high autocorrelation with regard to cyan. Similarly, also with regard to different ink colors, the value of the autocorrelation sensitivity H is calculated and individually compared with the reference autocorrelation sensitivity value (predetermined value) $H_0$ set in advance. In this instance, for example, approximately 1.3 is selected as the value of the exponent value n.

It is to be noted that the reference autocorrelation sensitivity value $H_0$ can be set by inputting operation of the operator. Therefore, it is possible to set the reference autocorrelation sensitivity value $H_0$ to a rather high value to set the noticed pixel region restrictively to a region having a considerably high autocorrelation so that the density detection sensitivity is raised from a point which is of a monochrome of the pertaining ink and has a high tone thereby to raise the accuracy of the color tone control although the noticed pixel region decreases. Or, it is possible to set the reference autocorrelation sensitivity value $H_0$ to a rather low value to set the noticed pixel region including even a region in which the autocorrelation is not very high so that the noticed pixel region is expanded thereby to raise the accuracy of the color tone control although the density detection sensitivity drops. Naturally, a recommendable value (for example, an average autocorrelation value over the entire picture) of the reference autocorrelation sensitivity value $H_0$ is inputted in advance, and an unskilled operator can utilize the recommendable value. Further, in principle, while the reference autocorrelation sensitivity value $H_0$ is commonly used for the different ink colors, also it is a possible idea to make the reference autocorrelation sensitivity value $H_0$ different among the different ink colors.

Then, a target density is set for each of the set noticed pixel regions of each ink (step S04). In particular, the calculation apparatus 5 receives ink supplying amount adjustment information (simulation information of ink supplying amount adjustment), that is, changed solid density values of the individual ink colors, transmitted thereto from the printing simulation apparatus 7 through the operation terminal personal computer 3, and changes a target tone value by an amount corresponding to a changing ratio of the changed solid density value of each ink color with respect to the reference solid density value and sets the changed target tone value as a new target tone value. Then, the calculation apparatus 5 calculates target densities Io, Ro, Go, Bo from the target tone values using the solid density values $Di(\lambda)$ of the wavelength $\lambda$ of the colors of I (infrared radiation), R (red), G (green), B (blue) acquired in advance and the known expanded Neugebauer expression given hereinbelow wherein the Yule-Nielsen coefficient is set in advance to a predetermined value n with which the relationship between the tone values c, m, y, k and the density values I, R, G, B becomes substantially linear.

After the target densities Io, Ro, Co, Bo are calculated in such a manner as described above, printing is started and processes at steps beginning with step S10 are executed repetitively. First, at step S10, the line sensor type IRGB densitometer 16 measures the reflected light amounts i' , r' , g' , b' of each of the pixels on the overall face of the overall printing sheet 10. The reflected light amounts i',r',g',b' of the pixels measured by the IRGB densitometer 16 are inputted to the DSP 31.

The DSP 11 carries out, at step S20, moving averaging in a unit of a predetermined number of prints with regard to the reflected light amounts i' , r' , g' , b' of the pixels s to calculate reflected light amounts i, r, g, b of the pixels from which noise components are removed. Then, at step S30, the reflected light amounts i, r, g, b of the noticed pixel regions are averaged for each key zone to calculate densities (actual densities) I, R, G, B with reference to a reflected light amount at a blank portion. If only the average line ratios of the ink key zones are available, then the reflected light amounts i, r, g, b of the key zones are averaged for each key zone to calculate densities I, R, G, B with reference to a reflected light amount at a blank portion. For example, where the reflected light amount of infrared radiation at a blank portion is represented by ip and an average reflected light amount of the infrared radiation in the key zones is represented by ik, the actual density I of the infrared radiation can be calculated from $I = \log_{10}(ip/ik)$. The color mixture halftone densities I, R, G, B of each noticed pixel region calculated by the DSP 11 are inputted to the color conversion section 14 of the PC 12.

The color conversion section 34 carries out the processes at steps S40A, S40B, S50A, S50B and S60. First, at step S40A, the target densities Io, Ro, Go, Bo set at step S04 are calculated individually, and at step S40B, the tone values of each ink color corresponding to the actual color mixture halftone densities I, R, G, B calculated at step S30 are calculated individually. The database 141 is used for the calculations, and the tone values of each ink color corresponding to the target densities Io, Ro, Go, Bo are calculated as target tone values ko, co, mo, yo and the tone values of each ink color corresponding to the actual densities I, R, G, B are calculated as actual tone values k, c, m, y.

Here, to the database 141, not only the conversion table [hereinafter referred to sometimes as look-up table (LUT)] produced based on the printing result obtained by printing the color scale of the Japan Color (ISO12642) or the like under the standard density is inputted as described hereinabove. Meanwhile, also a publicly known expanded Neugebauer expression which is produced based on the printing result described above and wherein the Nielsen coefficient (Yule-Nielsen coefficient) n is set to a predetermined value n with which the relationship between the tone values and the density values becomes substantially linear is inputted.

[Expression 3]

$$10^{-Da(\lambda)/n} = (1 - K)(1 - c)(1 - m)(1 - y)$$
$$+ k(1 - c)(1 - m)(1 - y)10^{-Dk(\lambda)/n}$$
$$+ c(1 - k)(1 - m)(1 - y)10^{-Dc(\lambda)/n}$$
$$+ m(1 - k)(1 - c)(1 - y)10^{-Dm(\lambda)/n}$$
$$+ y(1 - k)(1 - c)(1 - m)10^{-Dy(\lambda)/n}$$
$$+ kc(1 - m)(1 - y)10^{-Dkc(\lambda)/n}$$
$$+ km(1 - c)(1 - y)10^{-Dkm(\lambda)/n} + ky(1 - c)(1 - m)10^{-Dky(\lambda)/n}$$
$$+ cm(1 - k)(1 - y)10^{-Dcm(\lambda)/n} + cy(1 - k)(1 - m)10^{-Dcy(\lambda)/n}$$
$$+ my(1 - k)(1 - c)10^{-Dmy(\lambda)/n} + kcm(1 - y)10^{-Dkcm(\lambda)/n}$$
$$+ kcy(1 - m)10^{-Dkcy(\lambda)/n} + kmy(1 - c)10^{-Dkmy(\lambda)/n}$$
$$+ cmy(1 - k)10^{-Dcmy(\lambda)/n} + kcmy10^{-Dkcmy(\lambda)/n}$$

$$\cdots \quad (A)$$

where, Da (λ) : color mixture halftone density value;

k, c, m, y: tone values of corresponding inks;
Di(λ): solid density value of wavelength λ of each color i (extracted from color scale data);
i: one of Cyan, Magenta, Yellow, Black and color mixture of them;
for example, Dc: solid density value of Cyan, Dm: solid density value of Magenta, Dy: solid density value of Yellow;
Dk: solid density value of Black;
Dcm: two-color overlapping solid density value of Cyan and Magenta, Dcy: two-color overlapping solid density value of Cyan and Yellow, Dmy: two-color overlapping solid density value of Magenta and Yellow;
Dkc: two-color overlapping solid density value of Cyan and Black, Dkm: two-color overlapping solid density value of Magenta and Black, Dky: two-color overlapping solid density value of Yellow and Black;
Dcmy: three-color overlapping solid density value of Cyan, Magenta and Yellow;
Dkcm: three-color overlapping solid density value of Cyan, Magenta and Black;
Dkcy: three-color overlapping solid density value of Cyan, Yellow and Black;
Dkmy: three-color overlapping solid density value of Magenta, Yellow and Black;
Dcmyk: four-color overlapping solid density value of Cyan, Magenta, Yellow and Black
λ: wavelength region for each of R, G, B, I, for example, R = 650 nm, G = 550 nm, B = 450nm, I = 800 nm; and
n: coefficient of Yule-Nielsen.

It is to be noted that c, m, y, k, kc, km, ky, cm, cy, my, kcm, kcy, kmy, cmy and kcmy in the expression (A) indicate the halftone dot ratios of the colors (monochromes or color mixtures). Regarding the color mixtures, for example, kc indicates the product of the tone values of black (k) and cyan (c), and, for example, kcmy indicates the product of black (k), cyan (c), magenta (m) and yellow (y).

Further, Dkc(λ), Dkm(λ), ..., Dkcmy(λ) [solid density value Di(λ) of the wavelength λ of each color i] in the expression (A) individually indicate each a solid overlapping density value of the wavelength λ in the target density value for each ink color. For example, Dkc(λ) indicates a density value of the wavelength λ in the target density value of each color in the color mixture between black (k) and cyan (c), and, for example, Dkcmy(λ) indicates a density value of the wavelength λ in the target density value of each color in the color mixture among black (k), cyan (c), magenta (m), and yellow (y). It is to be noted that λ indicates the wavelength of I, R, G, or B. The Di(λ) values are calculated in advance as described above.

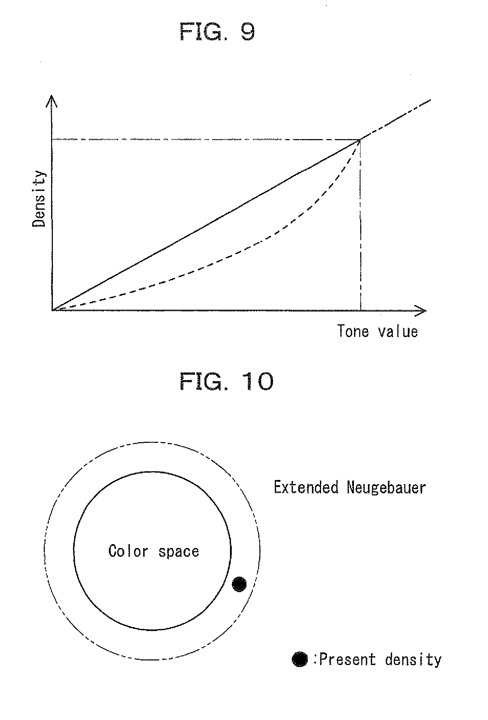

Also in the publicly known Neugebauer expression or the expanded Neugebauer expression, if the Nielsen coefficient n is not suitably set, then the relationship between the tone values and the densities normally exhibits a curve as indicated by a broken line in FIG. 9. It is to be noted that, while the example of FIG. 9 is a section where, as an example, the tone values are fixed to $c = m = y = 0$ and the relationship between the monochromatic tone values of k and the densities is plotted, such a non-linear relationship as described above appears also in a multi-dimensional space. On the other hand, where the publicly known expanded Neugebauer expression (A) wherein the Nielsen coefficient n is set to a predetermined value is used, the relationship between the tone values and the densities becomes such a linear relationship as indicated by a full line in FIG. 9. Such a linear relationship as just described appears also in a multi-dimensional space.

Accordingly, as seen from a region limit indicated by an alternate long and short dash line in FIG. 10, the relationship between the tone values and the densities in a color space region assumed with respect to the reference density can be easily extended and applied to an outer side region of the color space as indicated by an alternate long and two dashes line in FIG. 10. In particular, the relationship between the tone values and the densities can be applied also to the outside space to the color space region indicated by a full line circle in FIG. 10, and the color space can be substantially extended as indicated by an alternate long and two dashes line circle in FIG. 10 while the relationship between the tone values and the densities is set with respect to the reference density. It is to be noted that a region where the tone value exceeds 100 % is a virtual halftone dot region. In particular, a tone value which is impossible with plate making data from the publicly known expanded Neugebauer expression (A) is defined as a virtual halftone dot tone value.

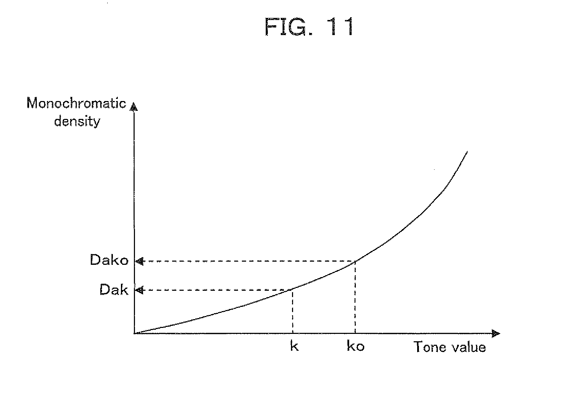

Next, the color conversion section 34 calculates target monochromatic densities of the ink colors corresponding to the target tone values ko, co, mo, yo at step S50A, and calculates actual monochromatic densities of the ink colors corresponding to the actual tone values k, c, m, y at step S50B. Such a map as shown in FIG. 11 is used for the calculations. FIG. 11 shows an example of a map wherein the monochromatic density measured where the tone values are varied is plotted as a characteristic curve, and the map is produced from data measured in advance (picked up from the values of the database 141). In the example shown in FIG. 11, by collating the target tone values ko and the actual tone values k of black with the map, a target monochromatic density Dako and an actual monochromatic density Dak are calculated from the characteristic curve in the map. As described above, the color conversion section 34 calculates target monochromatic densities Dako, Daco, Damo, Dayo and actual monochromatic densities Dak, Dac, Dam, Day of the ink colors.

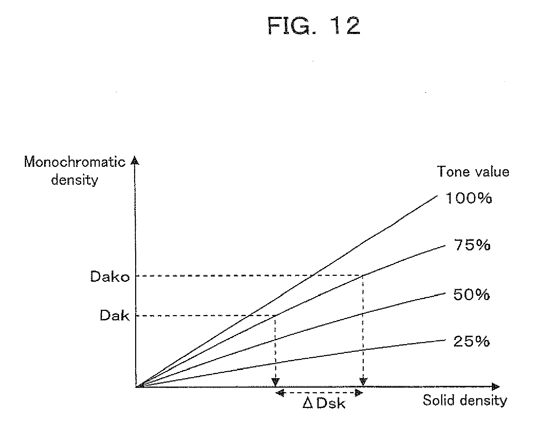

Then, at step S60, the color conversion section 34 calculates solid density differences ΔDsk, ΔDsc, ΔDsm, ΔDsy of the ink colors corresponding to differences between the target monochromatic densities Dako, Daco, Damo, Dayo and the actual monochromatic densities Dak, Dac, Dam, Day. It is to be noted that the solid density depends also on the tone values, and, with regard to the monochromatic density, the solid density decreases as the tone values increase. Therefore, the color conversion section 34 carries out calculation using such a map as shown in FIG. 12. FIG. 12 shows an example of a map where the monochromatic density actually measured where the monochromatic solid density is varied is plotted as a characteristic curve for each tone value, and the map is produced from data measured in advance. The color conversion section 34 selects the characteristic curves corresponding to the target tone values ko, co, mo, yo of the ink colors from within the map shown in FIG. 12, and calculates the solid density differences ΔDsk, ΔDsc, ΔDsm, ΔDsy by applying the target monochromatic densities Dako, Daco, Damo, Dayo and the actual monochromatic densities Dak, Dac, Dam, Day to the selected characteristic curves. In the example shown in FIG. 12, if the target monochromatic density Dako and the actual monochromatic density Dak are collated with the map where the target tone value of black is 75%, then the solid density difference ΔDsk of black is calculated from within the 75% characteristic curve in the map.

The solid density differences ΔDsk, ΔDsc, ΔDsm, ΔDsy of the individual ink colors calculated by the color conversion section 34 are inputted to the ink supplying amount calculation section 35. At step S70, the ink supplying amount calculation section 35 calculates key opening difference amounts ΔKk, ΔKc, ΔKm, ΔKy corresponding to the solid density differences ΔDsk, ΔDsc, ΔDsm, ΔDsy, respectively. The key opening difference amounts ΔKk, ΔKc, ΔKm, ΔKy are increasing or decreasing amounts from the key openings Kk0, Kc0, Km0, Ky0 at present (key openings Kk, Kc, Km, Ky outputted to the controlling apparatus 17 of the printing press by the process at step S100 in the preceding operation cycle) of the individual ink keys 7, and the ink supplying amount calculation section 35 carries out the calculation using the known API function (auto-preset inking function). The API function is a function indicating a relationship between image line ratios A (Ak, Ac, Am, Ay) and the key openings K (Kk, Kc, Km, Ky) for each key zone to establish a reference density. As the image line ratios A, values used at step S04, that is, those values obtained by an averaging process of the tone values among the key zones, may be used. More particularly, the ink supplying amount calculation section 35 calculates the ratios kd ($kd = \Delta Ds/Ds$) of the solid density differences ΔDs (ΔDsk, ΔDsc, ΔDsm, ΔDsy) to reference densities Ds (Dsk, Dsc, Dsm, Dsy) and the key opening K for obtaining a reference density with respect to each of the image line ratios A using the APT function. Then, the ink supplying amount calculation section 35 calculates the product of the image line ratios A and the key openings K to calculate key opening difference amounts ΔK ($\Delta K = kd \times K$) for

reducing the solid density differences ΔDs to zero.

Then, at step S80, the online control section 36 corrects the key opening difference amounts ΔKk, ΔKc, ΔKm, ΔKy calculated by the color conversion section 14 taking the dead times from the printing units 2a, 2b, 2c and 12d to the line sensor type IRGB densitometer 16, reaction times of the ink keys 27 per unit time and the printing speed into consideration. In the correction, a time delay after a key opening signal is inputted until a corresponding ink key 27 moves to change the key opening thereby to change the ink amount to be supplied to the printing sheet and the variation of the ink amount appears as a variation of the reflected light amount on the line sensor type IRGB densitometer 16 is taken into consideration. For such an online feedback control systemwhich involves considerable dead time as described above, for example, PI control with dead time compensation, fuzzy control or robust control is optically applied. The online control section 36 adds the key openings Kk0, Kc0, Km0, Ky0 at present to the key opening difference amounts (online control key opening differences) ΔKk, ΔKc, ΔKm, ΔKy to calculate online control key openings Kk1, Kc1, Km1, Ky1 and inputs the calculated online control key openings Kk1, Kc1, Km1, Ky1 to the key opening limiter calculation section 17.

At step S90, the key opening limiter calculation section 37 carries out correction of restricting upper limit values to the online control key openings Kk1, Kc1, Km1, Ky1 calculated by the online control section 36. This is a process for restricting the key openings from increasing abnormally particularly arising from an estimated error of the color conversion algorithm (processes at steps SS40, S50 and S60) in a low image line ratio region. Then at step S90, the key opening limiter calculation section 37 transmits the key openings Kk, Kc, Km, Ky whose upper limit values are restricted as key opening signals to the controlling apparatus 17 of the printing press.

At step S110, the controlling apparatus 17 adjusts the ink keys 7 of the printing units 2a, 2b, 2c and 2d based on the key openings Kk, Kc, Km, Ky received from the calculation apparatus 5. Consequently, the ink supplying amounts of the ink colors are controlled so as to conform to a target color tone for each key zone.

It is to be noted that, where the target densities are changed in such a manner as described above, the changing ratio ra is set (step S06, changing ratio setting step), and the target tone values ko', co', mo', yo' of the ink colors calculated at the target tone values calculation step of the step S40 are multiplied by the changing ratio ra set at the step S06 to change the target tone values ko, co, mo, yo (step S08, target tone value changing step).

Naturally, if the changing ratio ra is not inputted particularly, then the target tone values ko', co', mo', yo' of the ink colors calculated at step S40 are set as they are to the target tone values ko, co, mo, yo to be used at the next step (or, such logic may be used that the target tone values ko, co, mo, yo are calculated with the changing ratio ra set as a reference value 1).

If the changing ratio ra is set in this manner, then the target tone values ko, co, mo, yo changed at step S08 are reflected on the calculation of the target monochromatic densities Dako, Daco, Damo, Dayo of the ink colors at step S50A, calculation of the solid density differences ΔDsk, ΔDsc, ΔDsm, ΔDsy at step 5S0, calculation of the key opening difference amounts ΔKk, ΔKc, ΔKm, ΔKy at step S70 and calculation of the online control key openings Kk1, Kc1, Km1, Ky1 at step S80, and the color tone is controlled to the changed target density.

Since the color tone controlling method and apparatus according to the present embodiment are configured in such a manner as described above, the target densities Io, Ro, Go, Bo which are used as targets in the color tone control can be set appropriately without carrying out actual printing, and the color tone control can be carried out immediately after build up of the printing press (after an OK sheet).

Particularly, since the target densities Io, Ro, Go, Bo are set by color adjustment of a simulation screen image to the actual color sample (carried-in galley) 20 based on the characteristic of the printing press 6, the color tone can be controlled so as to coincide with that of the color sample (carried-in galley) 20 immediately after build up of the printing press.

Then, noticed pixel regions (noticed points) are individually set and the density of the noticed points is set as the target densities Io, Ro, Go, Bo, and the actual densities I, R, G, B of the corresponding noticed points on a main printing sheet are measured and used for feedback control. Consequently, also where plate making data such as 1 bit-Tiff or CIP4 data are not available, the color tone control can be performed for the specific noticed points of the picture.

Further, since measured values are not averaged over the entire key zone, even if the line ratio of the picture in the key zone is low (for example, even if the key zone includes a one-point small picture therein), the measurement error of the line sensor type IRGB densitometer 16 is small and the color tone control can be performed stably. Particularly, if a pixel having the highest density sensitivity is calculated and automatically extracted for each ink color and set as a noticed pixel region, then the color tone control can be performed more stably where the line ratio of the picture in the key zone is low. In particular, for example, the density sensitivity Hdc of cyan can be defined by "$Hdc = R^n/(R + G + B + I)$" using the measured density data (R, G, B, I) (n: an exponentiation of the autocorrelation and, for example, approximately 1.3), and the pixel having the highest value of the density sensitivity Hdc is calculated as the noticed point of cyan. Similarly, also with regard to the other ink colors, a pixel having the highest density sensitivity is calculated and the calculated pixel is set as the noticed point.

Then, if the value of the changing ratio (= changing coefficient) ra for the target density (target tone values) is suitably set as occasion demands to change the target tone values, then printing of a color tone more conforming to the request from the customer can be achieved and printing having a higher commercial value can be implemented by the color tone adjustment.

Particularly, where a configuration which directly changes the target density is adopted, if the target density of a wavelength having the highest sensitivity to a certain ink color is changed, then this has an influence on the density of the other ink colors. However, since the target tone values of the monochromes of the individual inks are changed to change the target density, even if the target density of a certain ink color is changed, the influence on the density of the other ink colors can be reduced. Therefore, the density changing can be performed suitably without giving rise to disorder.

Further, when the actual tone values are calculated from the actual densities and when the target tone values are calculated from the target densities, the publicly known expanded Neugebauer expression (A) is used wherein the solid density values $Di(\lambda)$ of the wavelengths $\lambda$ of the colors of I (Infrared radiation), R (Red), G (Green), B (Blue) are acquired in advance as a corresponding relationship between the tone values and the densities and the Yule-Nielsen coefficient is set to such a predetermined value n that the relationship between the tone values and the density values becomes substantially linear. Therefore, the corresponding relationship in the color space can be easily extended to the outside of the color space.

In particular, in the case of the publicly known expansion Neugebauer expression (A) wherein the Yule-Nielsen coefficient n is set to such a value that the relationship between the tone values and the density values becomes substantially linear, the relationship between the tone values and the densities becomes such a linear relationship as indicated by a solid line in FIG. 10. Therefore, also in a case wherein the density (density at present) of the actual printed matter comes out of the region within the color space (solid line circle) with respect to the standard density as indicated by a black round mark in FIG. 9, the relationship between the tone values and the densities in the color space region estimated with respect to the standard density can be easily extended and used.

Therefore, conversion from densities into tone values can be performed with certainty also with regard to the outside region of the color space defined with respect to the standard density (in this instance, since the tone values exceed 100 %, they become virtual tone values). For example, even if the changing ratio is set to the increasing side of the target tone values and the target density corresponding to the target tone values changed in response to the changing ratio is set to a density exceeding the color space defined with respect to the standard density. As a result, even if the density upon actual density printing exceeds the color space defined with respect to the standard density, the actual tone values can be calculated with certainty and the color tone control corresponding to the changing ratio can be performed.

[Modification to the Target Density change]

The target density change can be performed also by changing the dot gain correction coefficient.

In particular, using the following expression (D), correction is performed with dot gain correction coefficients kc, km, ky, kk to calculate color dot gain amounts (post-correction values) DGc to DGk when the monochromatic tone values of the plate data are 50%.

$$DGc = kc \times DGc'$$
$$DGm = km \times DGm'$$
$$DGy = ky \times DGy'$$
$$DGk = kk \times DGk' \qquad\qquad (D)$$

where kc, km, ky, kk are dot gain correction coefficients and are normally equal to 1.

It is to be noted that DGc', DGm', DGy', DGk' are calculated using values of the monochrome 50 % halftone density D50 and the monochrome 100 % solid density D100 obtained by printing a color scale of the Japan Color (IS012642) or the like with a reference density.

$$DG = (1 - 10^{-D50})/(1 - 10^{-D100}) - 0.5$$

Then, the plate making tone value data c' to k' can be dot-gain corrected in accordance with the following expressions (E) to obtain corrected tone value data k, c, m, y.

$$c = -DGc/0.25 \times (c' - 0.5)^2 + DGc + c'$$

$$m = -DGm/0.25 \times (m' - 0.5)^2 + DGm + m'$$

$$y = -DGy/0.25 \times (y' - 0.5)^2 + DGy + y'$$

$$k = -DGk/0.25 \times (k' - 0.5)^2 + DGk + k' \qquad (E)$$

where c ~ k: dot-gain corrected dot value data

c' ~ k' : plate making dot value data

The target density can be changed by changing such a dot gain correction coefficient. For example, where a roller, a bracket or the like of the printing machine is deteriorated to increase the dot gain, if the dot gain coefficient is increased higher than 1, then calculation of accurate target values is permitted.

[Example of a Configuration Used in Place of the Conversion Table in the First Embodiment]

In the following, a modification to the picture color tone control of a printing press of the present invention is described. In the present modification, the publicly known Neugebauer expression (B) which is dot gain corrected is used in place of the conversion table in the embodiment described above.

In particular, in place of the conversion table in the first embodiment produced based on the corresponding relationship obtained in advance by printing the color scale of the Japan Color (ISO12642) or the like under the standard density, the solid density values Di($\lambda$) of the wavelengths $\lambda$ of the colors of the colors of I (Infrared radiation), R (Red), G (Green), B (Blue) are acquired from data obtained in advance by printing the color scale of the Japan Color (ISO12642) or the like under the standard density and for which dot gain correction is performed, and the publicly known Neugebauer expression (B) for which dot gain correction is defined in such a manner as given below and the expression (B) is used to determine the color mixture halftone density.

[Expression 2]

$$10^{-Dao(\lambda)} = (1 - k)(1 - c)(1 - m)(1 - y)$$
$$+ k(1 - c)(1 - m)(1 - y)10^{-Dk(\lambda)}$$
$$+ c(1 - k)(1 - m)(1 - y)10^{-Dc(\lambda)}$$
$$+ m(1 - k)(1 - c)(1 - y)10^{-Dm(\lambda)}$$
$$+ y(1 - k)(1 - c)(1 - m)10^{-Dy(\lambda)} + kc(1 - m)(1 - y)10^{-Dkc(\lambda)}$$
$$+ km(1 - c)(1 - y)10^{-Dkm(\lambda)} + ky(1 - c)(1 - m)10^{-Dky(\lambda)}$$
$$+ cm(1 - k)(1 - y)10^{-Dcm(\lambda)} + cy(1 - k)(1 - m)10^{-Dcy(\lambda)}$$
$$+ my(1 - k)(1 - c)10^{-Dmy(\lambda)} + kcm(1 - y)10^{-Dkcm(\lambda)}$$
$$+ kcy(1 - m)10^{-Dkcy(\lambda)} + kmy(1 - c)10^{-Dkmy(\lambda)}$$
$$+ cmy(1 - k)10^{-Dcmy(\lambda)} + kcmy10^{-Dkcmy(\lambda)}$$

$$\cdots \quad (B)$$

where

$Dao(\lambda)$: target density value;
$k, c, m, y$: tone value data for which dot gain correction is performed;
$Di(\lambda)$: solid density value of wavelength $\lambda$ of each color $i$ (extracted from color scale data);
$i$: one of Cyan, Magenta, Yellow, Black and color mixture of them;
for example, $Dc$: solid density value of Cyan, $Dm$: solid density value of Magenta, $Dy$: solid density value of Yellow;
$Dk$: solid density value of Black;
$Dcm$: two-color overlapping solid density value of Cyan and Magenta, $Dcy$: two-color over lapping solid density value of Cyan and Yellow, $Dmy$: two-color overlapping solid density value of Magenta and Yellow;
$Dkc$: two-color overlapping solid density value of Cyan and Black, $Dkm$: two-color overlapping solid density value of Magenta and Black, $Dky$: two-color overlapping solid density value of Yellow and Black;
$Dcmy$: three-color overlapping solid density value of Cyan, Magenta and Yellow;
$Dkcm$: three-color overlapping solid density value of Cyan, Magenta and Black;
$Dkcy$: three-color overlapping solid density value of Cyan, Yellow and Black;
$Dkmy$: three-color overlapping solid density value of Magenta, Yellow and Black;
$Dcmyk$: four-color overlapping solid density value of Cyan, Magenta, Yellow and Black; and
$\lambda$ : wavelength region of each of R, G, B, I, for example, R = 650 nm, G = 550 nm, B = 450 nm, and I = 800 nm.

It is to be noted that, in the expression above, the Nielsen coefficient n in the publicly known expanded Neugebauer expression (A) described above is removed.
Also by this configuration, effects similar to those in the first embodiment can be achieved.
It is to be noted that, as regards the dot gain correction of the publicly known Neugebauer expression (B), the tone value data k, c, m, y in the expression (B) are dot gain corrected in the following manner.
First, monochromatic half tone densities $Dc50$ to $Dk50$ when the tone values of the plate making data are 50% and monochromatic solid densities (monochromatic solid halftone densities) $Dc100$ to $Dk100$ when the tone values of the plate making data are solid (100%) are obtained by extraction from the color scale density value data. Then, color dot gain amounts (values before correction) $DGc'$ to $DGk'$ when the monochromatic tone values of the plate making data are 50% are calculated using the following expression (C) based on the values obtained as above.

$$DGc' = (1 - 10^{-Dc50})/(1 - 10^{-Dc100}) - 0.5$$

$$DGm' = (1 - 10^{-Dm50})/(1 - 10^{-Dm100}) - 0.5$$

$$DGy' = (1 - 10^{-Dy50})/(1 - 10^{-Dy100}) - 0.5$$

$$DGk' = (1 - 10^{-Dk50})/(1 - 10^{-Dk100}) - 0.5 \quad (C)$$

where DGc to DGk: color dot gain amount when the monochromatic tone values of the plate making data are 50 %, Dc50 to Dk50: monochromatic halftone density when the tone values of the plate making data are 50% (extracted from the color scale density value data); and Dc100 to Dk100: monochromatic solid density when the tone values of the plate making data are solid (100%) (extracted from the color scale density value data).

Then, using the following expression (D), correction is performed with dot gain correction coefficients kc, km, ky, kk to calculate color dot gain amounts (values after correction) DGc to DGk when the monochromatic tone values of the plate making data are 50%.

Then, plate making tone value data c' to k' are dot gain corrected using the expression (E) given hereinabove to obtain corrected tone value data k, c, m, y.

It is to be noted that, in addition to the target density changing function of the present apparatus described above, the target density value to be provided to the sensor can be changed by the following method.

A sensor device profile (RGBI/L*a*b*) and an ICC profile (L*a*b*/cmyk) for solid density change are used to carry out color (CMS) conversion to obtain target densities Ro, Go, Bo, Io to be provided to the sensors for the plate making data cmyk.

In particular, at the target density setting step, an ICC profile (L*a*b*/cmyk) which is a printing characteristic of the printing press corresponding to a solid density change of the solid density values of the ink colors from the reference solid density values according to the color state corrected at the color correction step and a sensor device profile (RGBI/L*a*b*) which is a detection characteristic of the IRGB densitometer are used to carry out color conversion to set the target densities Ro, Go, Bo, Io for the tone values c, m, k, y of the plate making data.

Or, a reference rotary press ICC profile (L*a*b*/cmyk) and an ICC profile (c'm'y'k'/Lab) for a solid density change are used to carry out color (CMS) conversion to obtain conversion plate making data (c'm'y'k') to be provided to the quality controlling apparatus. Then, the plate making data (c'm'y'k') are converted using a sensor device profile (RGBI/L*a*b*) to obtain target densities Ro, Go, Bo, Io to be provided to the sensors for the plate making data cmyk.

In particular, at the target density setting step, an ICC profile (L*a*b*/cmyk) which is a printing characteristic of a different printing press for reference (reference rotary press) from a printing press (object printing press) corresponding to a solid density change of the solid density values of the ink colors from the reference solid density values according to the color state corrected at the color correction step and a sensor device profile (RGBI/L*a*b*) which is a printing characteristic of the printing press (object printing press) for the solid density change are used to carry out color conversion to obtain converted plate making data c', m', y', k'. Then, the converted plate making data are converted using the sensor device profile which is a detection characteristic of the IRGB densitometer to set the target densities Io, Ro, Go, Bo for the tone values c, m, k, y of the plate making data which are to be provided to the IRGB densitometer.

Or, at the target density setting step, an ICC profile (L*a*b*/cmyk) which is a printing characteristic of the reference rotary press corresponding to the solid density change from the solid density values of the ink colors according to the color state corrected at the color correction step and a CC profile which is a printing characteristic of the object printing press for the solid density change may be used to carry out color conversion to obtain converted plate making data c', m', y', k'. Then, the target densities Io, Ro, Go, Bo may be set from the converted plate making data c'm'y'k' by calculation in which the solid density values Di' ($\lambda$) of the wavelength $\lambda$ of the colors of I (infrared radiation), R (red), G (green) and B (blue) acquired in advance and the publicly known expansion Neugebauer expression (A) given hereinabove wherein the Yule-Nielsen coefficient is set to such a value n that the relationship between the tone values and the density values becomes substantially linear are used.

[Second Embodiment]

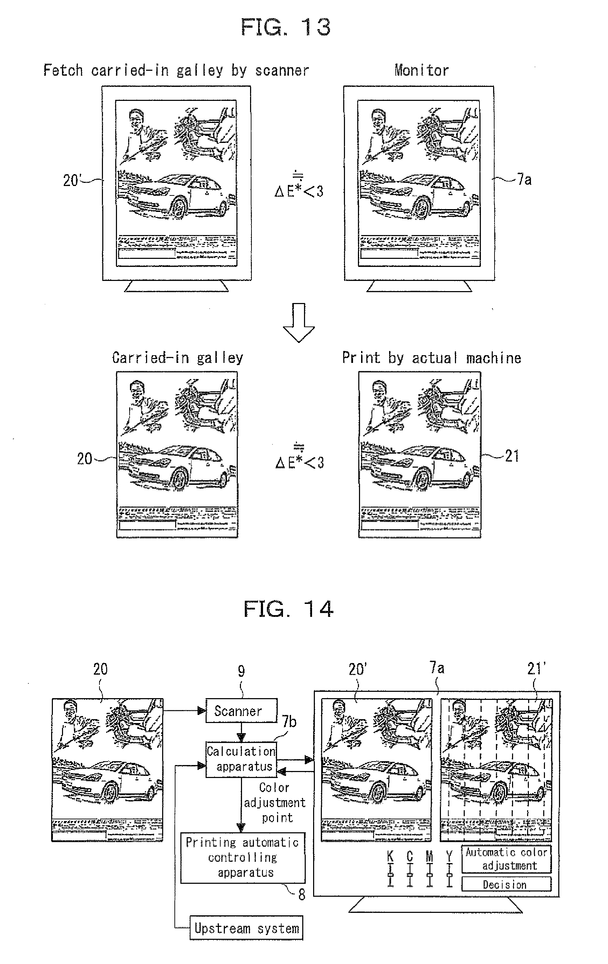

Now, a second embodiment of the present invention is described with reference to FIGS. 13 to 15. It is to be noted that, in FIGS. 13 and 14, like reference characters to those of FIGS. 1, 3 and 4 denote like elements, and description of them is omitted or simplified therein.

While, in the first embodiment, the operator refers to the carried-in galley 20 itself to carry out color adjustment of a display image of the monitor 7a, according to the present embodiment, as shown in FIG. 13, the carried-in galley 20 is fetched using a scanner, and then an image 20' fetched from the carried-in galley 20 by the scanner 9 is displayed in a juxtaposed relationship with an image 21' obtained by simulating a color situation of a target object picture which may be obtained by the printing press 6 on the screen of the monitor 7a to carry out color adjustment similarly as in the first embodiment.

Accordingly, the configuration of the printing simulation apparatus is different from that in the first embodiment, but the printing press and the printing automatic controlling apparatus themselves are configured similarly to those of the first embodiment (refer to FIG. 1).

In the present embodiment, as seen in FIG. 14, the scanner 9 is provided for the printing simulation apparatus 8, and an image 21' obtained by simulating a color situation of a printing object picture which may be obtained by the printing press 6 and an image 20' fetched from the carried-in galley 20 by the scanner 9 are displayed in a juxtaposed relationship on the monitor 7a. It is to be noted that functions (refer to FIG. 2) of the monitor 7a as a touch panel such as a page number displaying function [refer to FIG. 2(a)], a volume key displaying function [refer to FIG. 2(b)] and a determination button displaying function [refer to FIG. 2(c)] are similar to those in the first embodiment. In addition, an automatic color adjustment button is displayed and functions.

Further, in the present embodiment, the calculation apparatus 7b automatically carries out color adjustment of an image 21' obtained by simulating the color situation of a printing object picture with an image 20' fetched by the scanner in advance.

In particular, at a stage of displaying on the monitor 7a, where a value $E_1$ [$E_1$ is, for example, a color coordinate value $(L_1, a_1, b_1)$] of the color characteristic of each pixel of the image 20' and a value $E_2$ [$E_2$ is, for example, a color coordinate value $(L_2, a_2, b_2)$] of each pixel of the image 21' can be acquired, and regarding each pixel or pixels in a particular region, the color characteristic value $E_2$ of the image 21' can be made approach the color characteristic value $E_1$ of the image 20' so that the average value $\Delta E^*_{AVE}$ of the differences $\Delta E^*$ (refer to the description given below) between the values $E_1$ and $E_2$ of the color characteristic of the pixels may be minimized.

$$\Delta E^* = \sqrt{(L_1 - L_2)^2 + (a_1 - a_2)^2 + (b_1 - b_2)^2}$$

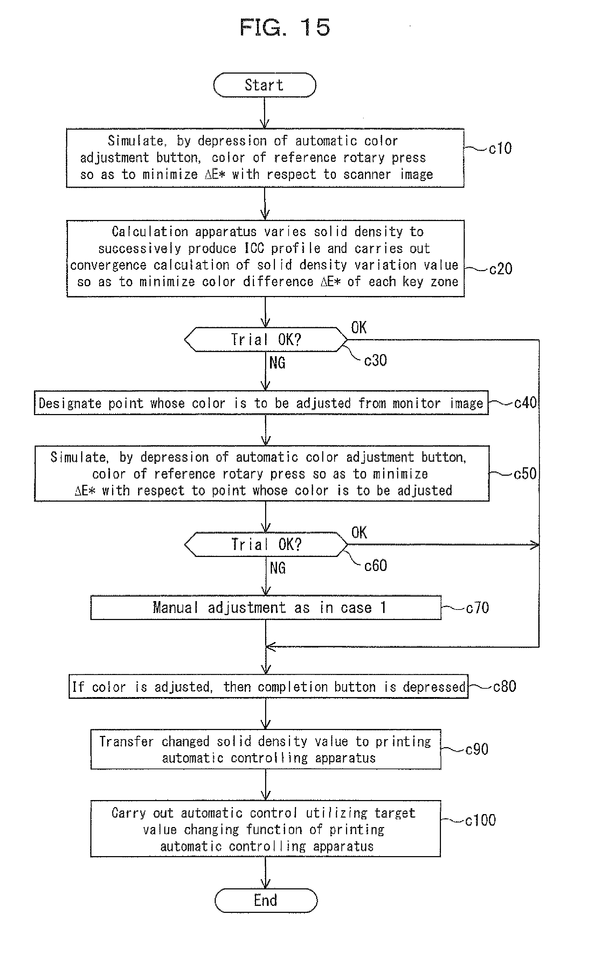

Accordingly, in the case of the present embodiment, setting of a target density value by a printing simulation is carried out as seen in FIG. 15.

In particular, if the automatic color adjustment button is pushed first, then the color of the reference rotary press is simulated so that the color difference $\Delta E^*$ from the scanner image may be minimized (step c10). The calculation apparatus 7b carries out convergence calculation of the solid density change value with which the color differences $\Delta E^*$ of each key zone is minimized while it successively changes the solid density to produce an ICC profile (step c20). The operator would visually observe a result of the convergence calculation to decide whether or not the trial is OK (step c30). If the trial is OK, then the operator would determine that the color adjustment results in success and push the completion button (step c80). Consequently, the changed solid density values are transferred to the printing simulation apparatus 8 (step c90). The printing simulation apparatus 8 sets target densities $R_o$, $G_o$, $B_o$, $I_o$ to be used for printing by the printing press 6 in response to the simulation information of the ink supplying amount adjustment (which corresponds also to target value change) to automatically control the color adjustment (step c100).

On the other hand, if the trial is not OK, then a point at which the color should be adjusted would be designated from within the monitor screen image (step c40), and then the automatic color adjustment button would be pushed. Consequently, the color of the reference rotary press is simulated so that the color difference $\Delta E^*$ at the point at which the color shouldbe adjusted is minimized (step c50). The operator would visually observe a result of the simulation to decide whether or not the trial is OK (step c60). If the trial is OK, then the processes at steps c80 to c100 described above are carried out.

If the trial is not OK at step c60, then color adjustment would be carried out manually similarly as in the first embodiment (step c70).

The present embodiment can achieve the following advantages.

Since the color is confirmed between different monitors (transmission colors), the color can be adjusted readily. In particular, as indicated as "$\Delta E^* < 3$" in FIG. 13, the difference $\Delta E^*$ in color between the color sample (here, the image 20' obtained by fetching from the carried-in galley 20 by the scanner) and a pseudo print image or a main print which is based on a result of the pseudo printing exhibits a level "3" lower than the difference in the case of the first embodiment, and the target density value can be set to a value more proximate to its optimum value and it is possible to print in more appropriate color from the beginning of actual printing.

Since the color of a carried-in galley is fetched by the scanner, the color can be evaluated in numerical value. Consequently, the color difference of the entire picture can be minimized, and since the trial can be confirmed on a monitor and the color target value is fetched and used for automatic control, the necessity for the operator to carry out color adjustment after the beginning of printing till the end of the printing is eliminated.

Further, the color difference can be minimized paying attention to the color of the picture at a designated point, and since the trial can be confirmed on the monitor and the color target value is fetched and used for automatic control, the necessity for the operator to carry out color adjustment from the beginning to the end of printing is eliminated and labor saving can be achieved.

Further, when the trial results in failure, since color adjustment can be carried out also manually and the color target value is fetched and used for automatic control, the necessity for the operator to carry out color adjustment from the beginning to the end of printing is eliminated and labor saving can be achieved.

Since the operator adjustment is eliminated, no broke appears.

Also the manual color adjustment or adjustment in advance can be carried out by an amateur or even by a plate making operator or a client.

[Third Embodiment]

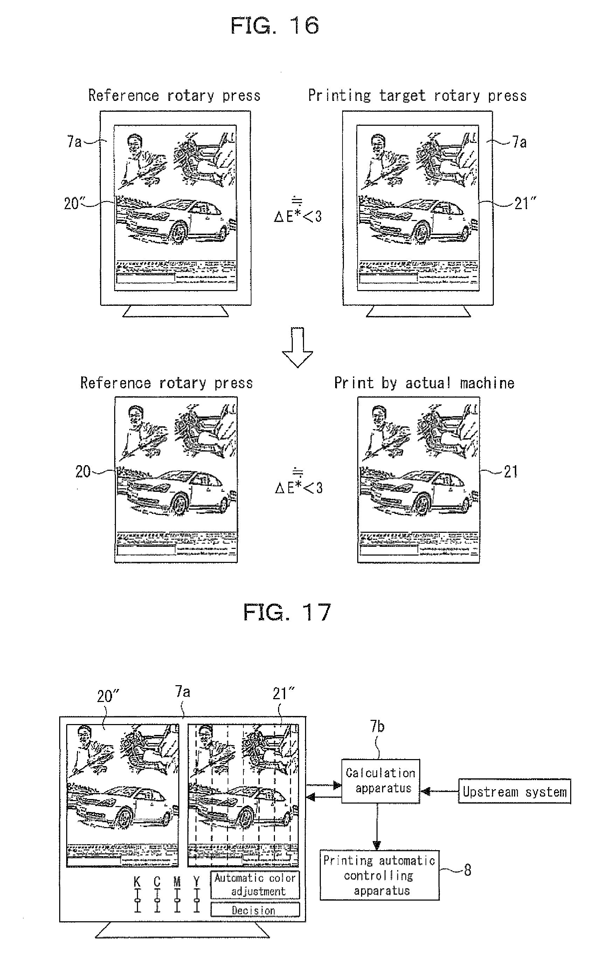

Now, a third embodiment of the present invention is described with reference to FIGS. 16 to 20. It is to be noted that, in FIGS. 16 and 17, like reference characters to those of FIGS. 1, 3, 4 and 13 denote like elements, and description of them is omitted or simplified therein.

While, in the embodiments described above, a case is described where in a newspaper rotary press which carries out printing is regarded as a reference rotary press and the target density value of the reference rotary press is adjusted to the color tone of a carried-in galley, in the present embodiment, a method wherein a newspaper rotary press which carries out printing is set to a factory rotary press (hereinafter referred to also as object rotary press) installed in each printing factory and a noticed color of the factory rotary press is adjusted to a noticed color of the reference rotary press.

When a color tone where printing is carried out by the reference rotary press is to be displayed on a monitor, similarly as in the first and second embodiments, an ICC profile of the reference rotary press is converted using printing field image data to obtain display image information which simulates a result of printing of the reference rotary press. Further, in order to display the color tone where printing is carried out by a factory rotary press on a monitor, similarly an ICC profile of the factory rotary press is converted using printing field image data to obtain display image information which simulates a result of printing of the factory rotary printer.

Then, as seen in FIG. 17, an image 20" which simulates a result of printing of the reference rotary printing corresponding to a print (sample) 20 produced by the reference rotary printer and an image 21" which simulates a result of printing of the factory rotary printer corresponding to a print (actual print) 21 produced by the factory printing press are displayed in contrast to each other on the monitor 7a so that a target density value for printing by the factory rotary press can be obtained similarly as in the first embodiment.

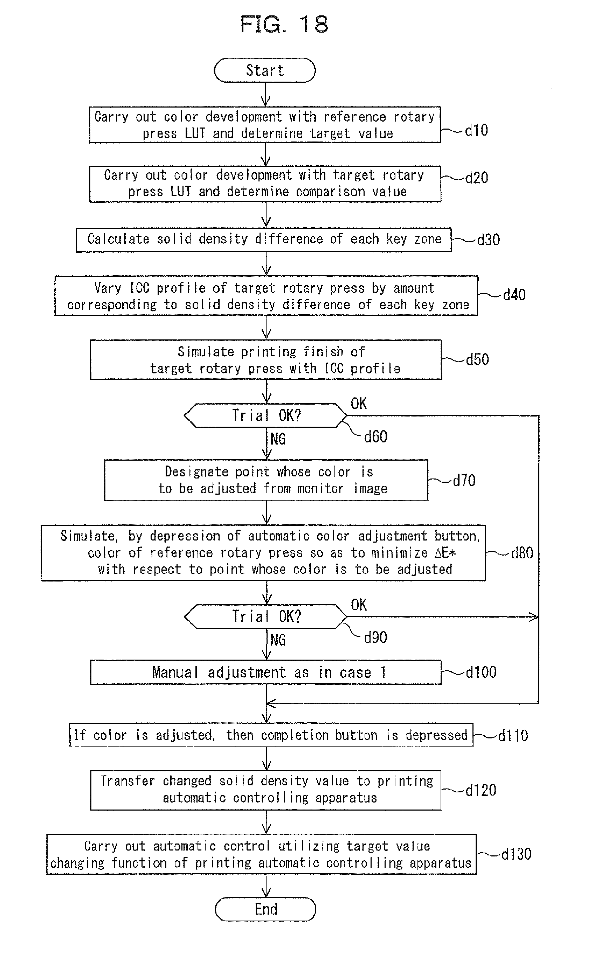

Accordingly, in the case of the present embodiment, setting of a target density value by a printing simulation is carried out as seen in FIG. 18.

In particular, a reference rotary press LUT is used for color to determine a target value (step d10), and an object rotary press LUT is used for color to determine a comparison value (step d20). Then, the solid density difference of each key zone is calculated (step d30), and the ICC profile of the object rotary press is changed with the solid density differences of the key zones (step d40). Further, a simulation of a printing finish of the object rotary press is carried out with the ICC profile at step d40 (step d50).

The operator would visually observe a result of the simulation to decide whether or not the trial is OK (step d60). If the trial is OK, then the operator would determine that the color has been adjusted successfully and push the completion button (step d110). Consequently, the changed solid density values are transferred to the printing simulation apparatus 8 (step d120). The printing simulation apparatus 8 sets the target density values $R_o$, $G_o$, $B_o$, $I_o$ to be used when printing is carried out by the printing press 6 in response to simulation information of the ink supplying amount adjustment (corresponding also to target value change, and automatically controls the color tone (step d130).

On the other hand, if the trial is not OK, then a point at which the color should be adjusted would be designed in the monitor image (step d70). Then, if the automatic color adjustment button is pushed in this state, then the color of the reference rotary press is simulated so that the differences $\Delta E^*$ at the point at which the color should be adjusted may be minimized (step d80). The operator would visually observe a result of the simulation to decide whether or not the trial is OK (step d90). If the trial is OK, then the processes at steps d110 to d130 described hereinabove are carried out.

If the trial is not OK at step d90, then the operator would carry out color adjustment manually similarly as in the first embodiment.

The present embodiment can achieve the following effects.

In particular, since the color is confirmed between different monitors, the color can be adjusted readily. In particular, as indicated as "$\Delta E^* < 3$" in FIG. 16, the difference $\Delta E^*$ in color between the color sample (here, the image 20" obtained by simulating a result of printing by the reference rotary press) and a pseudo print image or a main print which is based on a result of the pseudo printing exhibits a comparatively low level "3", and the target density value can be set to a value more proximate to its optimum value and it is possible to print in more appropriate color from the beginning of actual printing.

A finish of printing can be confirmed on the monitor with regard to by what degree the color of the object rotary printer approaches the color of the reference rotary press, and if the finish of printing is not favorable, then the finish can be varied.

Further, the color difference can be minimized paying attention to the color of the picture at a designated point, and since the trial can be confirmed on the monitor and a color target value is fetched and used for automatic control, the necessity for the operator to carry out color adjustment from the beginning to the end of printing is eliminated and labor saving can be achieved.

Further, when the trial results in failure, since color adjustment can be carried out also manually and a color target value is fetched and used for automatic control, the necessity for the operator to carry out color adjustment from the beginning to the end of printing is eliminated and labor saving can be achieved.

Also the manual color adjustment or adjustment in advance can be carried out by an amateur or even by a plate making operator or a client.

[Production Method of an ICC Profile]

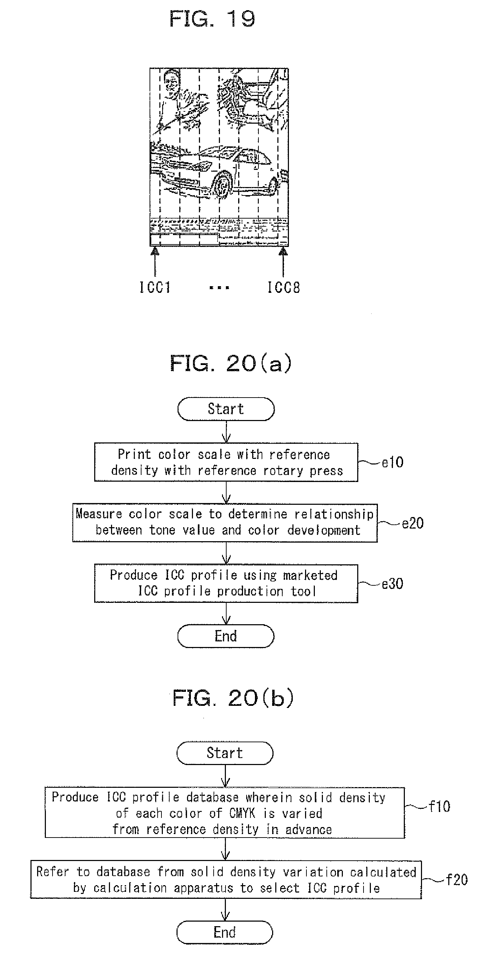

It is to be noted that, in order to produce an ordinary ICC profile, for example, as seen in FIG. 20(a), a color scale (ISO1264 or the like) is printed with a reference density by a reference rotary press (step e10), and color (X, Y, Z or L*a*b*) of the color scale with respect to a tone value is measured (step e20). Then, data obtained at step e20 are read by a profile production tool sold on the market to produce an ICC profile (step e30).

In order to produce an ICC profile corresponding to a key zone, a printing picture is divided into regions ICC1 to ICC8 corresponding to the key zones of the ink keys. The solid density of each of the colors of CMYK is varied by ±AD from a reference solid density as seen in FIG. 2(b), and an ICC profile database of the variation amounts is produced and retained (step f10). Then, an ICC profile is selected from database groups at step f10 when the solid density has a predetermined value (for example, the solid density is C: +0.10D, M: +0.03D, Y: -0.05D, K: 0.00) (step f20).

[Others]

While the embodiments of the present invention are described above, the embodiments of the present invention are not limited to those described above.

For example, the image 20" which simulates a result of printing of the reference rotary press of the third embodiment may have a form obtained by correcting a result of printing of the reference rotary press which is color-adjusted to a carried-in galley as described hereinabove in the description of the first and second embodiments. In particular, the ink supplying amount of the reference rotary press may be adjusted so as to adjust the print color of the reference rotary press to the color of the carried-in galley in advance as described hereinabove in the description of the first and second embodiments. Then, a result of printing by the reference printing press whose color is adjusted to the color of the carried-in galley may be simulated and displayed on the image 20", and then the ink supplying amount of the object rotary press may be adjusted.

Further, while, in the third embodiment, a result of printing of the reference rotary press is used as a color sample for the object rotary press, the carried-in galley may be used directly as a color sample for the object rotary press. This corresponds to a case wherein the printing press wherein the ink supplying amount is simulated and adjusted in the second embodiment is changed from the reference printing press to the object printing press.

It is to be noted that, where a "carried-in galley" is used as a reference to carry out color tone adjustment for a plurality of object printing presses, it is necessary to prepare a plurality of carried-in galleys, and if the color tones of the "carried-in galleys" are delicately different thereamong, then the object rotary presses are adjusted to the different color tones of the samples. Therefore, it is considered more preferable to adjust the object rotary presses to an image fetched from a carried-in galley in order to assure the accuracy in color adjustment. Further, from the point of view that it is desirable to standardize the colors of the object rotary presses located at different places in a country, it is considered more preferable to adjust the object rotary presses to the reference rotary press than to adjust the object rotary presses to "carried-in galleys" because the dispersion in color adjustment accuracy is smaller.

Further, while the present invention is suitably applied to a multicolor printing press, it can be applied also to a monochromatic printing press. Further, the present invention can be applied not only to printing presses for newspapers but also widely to various printing presses.

It is to be noted that, as regards color tone control, while, for example, in the embodiments described above, an IRGB densitometer of the line sensor type is used, an IRGB densitometer of the spot type may otherwise be used to scan a print sheet two-dimensionally.

While, in the embodiments described hereinabove, an "L*a*b*" color representation system is used for an ICC profile relating to a printing characteristic or a color characteristic, this is because the L*a*b* color representation system is used popularly for evaluation of the color difference in the printing industry. However, the color representation system is not limited to the "L*a*b*" color representation system but the "XYZ" color representation system or the "L*U*V*" color representation system may be used instead.

While, particularly where the present invention is applied to a multicolor printing press, difficult color adjustment can be carried out readily with certainty while appearance of broke is suppressed, the present invention can be applied widely to various printing presses.

**Claims**

1. A printing simulation method, comprising:

    a printing picture displaying step of acquiring a printing characteristic of a printing press to be used for printing and data of a printing picture to be printed by the printing press and displaying, on a monitor screen, an image of the printing picture obtained by simulating color by the printing press with the data of the printing picture converted using the printing characteristic of the printing press; and

    a color correction step of carrying out, while a sample of the printing picture is referred to, color correction state of the picture displayed on the monitor screen with respect to a density of an ink color upon printing so that a color tone of the picture displayed on the monitor screen approaches a color tone of the sample picture.

2. The printing simulation method as claimed in claim 1, wherein the sample of the printing picture to be referred to at the color correction step is an actually printed sample.

3. The printing simulation method as claimed in claim 1, wherein the sample of the printing picture to be referred to at the color correction step is an image fetched from an actually printed sample by a scanner and displayed on the monitor screen.

4. The printing simulation method as claimed in claim 1, wherein the sample of the printing picture to be referred to at the color correction step is an image of the printing picture obtained by simulating color by a printing press different from the printing press to be used for printing with the data of the printing picture converted using a printing characteristic of the different printing press and displayed on the monitor screen.

5. The printing simulation method as claimed in claim 4, wherein the color by the different printing press is color where an ink supplying amount is determined as a reference value.

6. The printing simulation method as claimed in claim 4, wherein the printing picture displaying step and the color correction step are carried out in advance with regard to the different printing press, and
the color by the different printing press is color corrected at the color correction step.

7. The printing simulation method as claimed in any one of claims 3 to 6, wherein, at the color correction step, a second color coordinate value which is a color coordinate value of the image obtained by simulating the color by the printing press to be used for printing and displayed on the monitor screen is corrected so that a distance between a first color coordinate value which is a color coordinate value of the sample image displayed on the monitor screen and the second color coordinate value is minimized to carry out the correction of the color state.

8. The printing simulation method as claimed in claim 7, wherein, at the color correction step, a specific region portion is noticed for each ink supplying unit width region to correct the second color coordinate value so as to minimize an average value in distance between the first and second color coordinate values of pixels in the specific region portion.

9. The printing simulation method as claimed in any one of claims 1 to 8, wherein the printing characteristic is an ICC profile for each ink supplying unit width.

10. The printing simulation method as claimed in claim 9, wherein the ICC profile is given by a calculation expression.

11. The printing simulation method as claimed in claim 9, wherein the ICC profile is a database of corresponding values of various combinations.

12. A picture color tone controlling method for a printing press, comprising:

a printing picture displaying step of acquiring a printing characteristic of a printing press to be used for printing and data of a printing picture to be printed by the printing press and displaying, on a monitor screen, an image of the printing picture obtained by simulating color by the printing press with the data of the printing picture converted using the printing characteristic of the printing press;

a color correction step of carrying out, while a sample of the printing picture is referred to, color correction state of the picture displayed on the monitor screen with respect to a density of an ink color upon printing so that a color tone of the picture displayed on the monitor screen approaches a color tone of the sample picture;

a target density setting step of setting, based on the color state corrected at the color correction step, a target density which is a target value of color, when printing is carried out by the printing press; and

a printing controlling step of detecting an actual density which is an actual value of the color of a printing result by the printing press and carrying out printing while controlling an ink supplying state by an ink supplying apparatus so that the actual density approaches the target density set at the target density setting step.

13. The picture color tone controlling method for a printing press as claimed in claim 12, wherein the printing press is a multi-color printing press; and,

at the target density setting step, a noticed pixel region which is noticed as a target of color tone control in the printing picture is set in advance for each ink supplying unit width and the target density which is a target density of the color when printing is carried out by the printing press is set based on the color state of the set noticed pixel region; and the printing controlling step includes:

an actual density measurement step of measuring an actual density of each noticed pixel region of an actually printed sheet obtained by printing using an IRGB densitometer;

a target tone value calculation step of calculating a target tone value of each ink color corresponding to the target density based on a corresponding relationship between a tone value and a density set in advance;

an actual tone value calculation step of calculating an actual tone value of each ink color corresponding to the actual density based on the corresponding relationship between the tone value and the density;

a target monochromatic density calculation step of calculating a target monochromatic density corresponding to the target tone value based on a corresponding relationship between the tone value and a monochromatic density set in advance;

an actual monochromatic density calculation step of calculating an actual monochromatic density corresponding to the actual tone value based on the corresponding relationship between the tone value and the monochromatic density;

a solid density difference calculation step of calculating a solid density difference corresponding to a difference between the target monochromatic density and the actual monochromatic density under the target tone value based on a corresponding relationship among the tone value, the monochromatic density and a solid density set in advance; and

an ink supplying amount adjustment step of adjusting an ink supplying amount for each ink supplying unit width of an ink supplying apparatus based on the solid density difference.

14. The picture color tone controlling method for a printing press as claimed in claim 12 or 13, wherein, at the color correction step, the correction of the ink supplying amount is simulated to carry out correction of the color state of the monitor screen,

the picture color tone controlling method further comprising an ink supplying amount preset step of setting, before the printing controlling step is started, the ink supplying amount to an amount of the state corrected in advance for each ink supplying unit width based on the correction of the ink supplying amount simulated at the color correction step.

15. A printing simulation apparatus, comprising:

a displaying section for displaying, on a monitor screen, an image of a printing picture obtained by simulating color by a printing press to be used for printing with data of the printing picture converted using a printing characteristic of the printing press; and

a color correction section for correcting a color state of the image of the printing picture displayed on the monitor screen with respect to a density of an ink color upon printing.

16. The printing simulation apparatus as claimed in claim 15, further comprising a color information outputting section for outputting information of the corrected color state.

17. The printing simulation apparatus as claimed in claim 15 or 16, further comprising an operation section for operating correction of the color state.

18. The printing simulation apparatus as claimed in any one of claims 15 to 17, wherein the image of the printing picture is an image obtained by fetching an actually printed sample by a scanner and displayed on the monitor screen.

19. The printing simulation apparatus as claimed in any one of claims 15 to 17, wherein the image of the printing picture is an image of the printing picture obtained by simulating color by a printing press different from the printing press to be used for printing with the data of the printing picture converted using a printing characteristic of the different printing press and displayed on the monitor screen.

20. The printing simulation apparatus as claimed in claim 19, wherein the color by the different printing press is color where an ink supplying amount is determined as a reference value.

21. The printing simulation apparatus as claimed in claim 19, wherein the color by the different printing press is color corrected by said color correction section with regard to the different printing press.

22. The printing simulation apparatus as claimed in any one of claims 15 to 21, wherein said color correction section includes an automatic correction section for automatically correcting the color state so that a distance between a first color coordinate value which is a color coordinate value of an image displayed on the monitor screen and a second color coordinate value which is a color coordinate value of the image obtained by simulating the color by the printing press to be used for printing and displayed on the monitor screen is minimized.

23. The printing simulation apparatus as claimed in claim 22, wherein said automatic correction section of said color correction section notes a specific region portion for each ink supplying unit width region and automatically corrects the color state so as to minimize an average value in distance between the first and second color coordinate values of pixels in the specific region portion.

24. The printing simulation apparatus as claimed in any one of claims 15 to 23, wherein the printing characteristic is an ICC profile for each ink supplying unit width.

25. The printing simulation apparatus as claimed in claim 24, wherein the ICC profile is given by a calculation expression.

26. Theprinting simulation apparatus as claimed in claim 24, wherein the ICC profile is a database of corresponding values of various combinations.

27. A picture color tone controlling apparatus for a printing press, comprising:

a displaying section for displaying, on a monitor screen, an image of a printing picture obtained by simulating color by a printing press to be used for printing with data of the printing picture converted using a printing characteristic of the printing press;
a color correction section for correcting a color state of the image of the printing picture displayed on the monitor screen with respect to a density of an ink color upon printing;
a color information outputting section for outputting information of the corrected color state;
a target density setting section for setting, based on the information of the color state outputted from said color information outputting section, a target density which is a target value of color when printing is carried out by said printing press;
a detection section for detecting an actual density which is an actual value of color of a printed picture; and
a controlling section for feedback controlling an ink supplying state by an ink supplying apparatus so that the actual density detected by said detection section approaches the target density set by said target density setting section.

28. The picture color tone controlling apparatus for a printing press as claimed in claim 27, wherein said target density setting section sets a noticed pixel region to be noticed as a target for color tone control in the printing picture in advance for each ink supplying unit width and notices the noticed pixel region to set the target density based on information of the color state of the set noticed pixel region.

**29.** The picture color tone controlling apparatus for a printing press as claimed in claim 27 or 28, wherein said printing press is a multi-color printing press, and said controlling section includes:

a target tone value calculation section for calculating a target tone value of each ink color corresponding to the target density based on a corresponding relationship between a tone value and a density set in advance;

an actual tone value calculation section for calculating an actual tone value of each ink color corresponding to an actual tone density based on a corresponding relationship between the tone value and the density;

a target monochromatic density calculation section for calculating a target monochromatic density corresponding to the target tone value based on a corresponding relationship between the tone value and a monochromatic density set in advance;

an actual monochromatic density calculation section for calculating an actual monochromatic density corresponding to the actual tone value based on the corresponding relationship between the tone value and the monochromatic density;

a solid density difference calculation section for calculating a solid density difference corresponding to a difference between the target monochromatic density and the actual monochromatic density under the target tone value based on a corresponding relationship among the tone value, the monochromatic density and a solid density set in advance; and

an ink supplying amount adjustment section for adjusting an ink supplying amount for each ink supplying unit width of an ink supplying apparatus based on the solid density difference.

**30.** The picture color tone controlling apparatus for a printing press as claimed in any one of claims 27 to 29, wherein said controlling section includes an ink supplying amount preset section for presetting the ink supplying amount for each ink supplying unit width based on the information of the color state from said color information outputting section.

**31.** A printing press, comprising:

an ink supplying apparatus capable of adjusting an ink supplying amount for each ink supplying unit width;

a displaying section for displaying, on a monitor screen, an image of a printing picture obtained by simulating color by said the printing press with data of the printing picture converted using a printing characteristic of said printing press to be used for printing;

a color correction section for correcting a color state of the image of the printing picture displayed on said monitor screen with respect to a density of an ink color upon printing;

a color information outputting section for outputting information of the corrected color state;

a target density setting section for setting, based on the information of the color state outputted from said color information outputting section, a target density which is a target value of color when printing is carried out by said printing press;

a detection section for detecting an actual density which is an actual value of color of a printed picture; and

a controlling section for feedback controlling an ink supplying state by an ink supplying apparatus so that the actual density detected by said detection section approaches the target density set by said target density setting section.

# FIG. 1

Carried-in galley (sample)

Print by actual machine

Carried-in galley (sample)

Monitor

$\Delta E^* < 4$

$\Delta E^* < 4$ Target value

20

21

20

7a

7

Printing simulation

Target density changing data

1 bit-Tiff data

Printing field image signal

5a 5

3a

3

1

From sensor of different printing unit

Ink supplying amount control

Printing field image signal

Low-resolution printing field image data

High-resolution printing field image data (Tiff format) job information (XML format)

Ink key control signal, dampening water control instruction

Rotary press state signal

5b

2

Driving condition

Defective printing field delivery instruction

Encoder signal

8

4

EP 2 039 512 A1

30

# FIG. 2

Example of page changeover: page is changed over to target page
by depression of page number

(a)  (1)  (2)  (3)  ...  (40)

Example of changing of overall color or key zone color:
monitor color is changed by upward or downward movement
of knob in figure below

(b)

```
        K       C       M       Y
+10 ─┬─     ─┬─     ─┬─     ─┬─ +0. 2D
     │       │       │       │
 0  ▓█      ▨       ▨       ▨
     │       │       │       │
-10 ─┴─     ─┴─     ─┴─     ─┴─ -0. 2D
```

Reference rotary press ICC profile is changed by amount corresponding
to changed solid density and printing color is simulated on monitor
by calculation apparatus CMS function

Target density change value is transmitted to printing automatic
controlling apparatus by depression of determination button

(c)  | Determination |

# FIG. 3

~20

# FIG. 4

·Page changeover
·Overall color change
·Key zone color change

~7a

←~7

determination

Screen image display

Page changeover, overall color change, key zone color change

7b~ | Calculation apparatus |

Image data, page information

Upstream system

Overall or key zone unit target density

8~ | Printing automatic controlling apparatus |

# FIG. 5

Start

Select page number corresponding to sample (carried-in galley) from monitor screen — b10

Calculation apparatus simulates color development using reference rotary press ICC profile and outputs simulated color development to monitor — b20

Adjust overall color or key zone color changing knob to adjust color of carried-in galley — b30

Calculation apparatus calculates ICC profile for each key zone corresponding to solid density change, successively simulates color development and outputs simulated color development to monitor — b40

If color is adjusted, then completion button on monitor screen is depressed — b50

Transfer changed solid density value to printing automatic controlling apparatus — b60

Perform automatic control utilizing target value changing function of printing automatic controlling apparatus — b70

End

# FIG. 6

EP 2 039 512 A1

FIG. 7

# FIG. 8

## FIG. 9

## FIG. 10

Extended Neugebauer

Color space

● :Present density

FIG. 11

FIG. 12

# FIG. 13

Fetch carried-in galley by scanner          Monitor

$$\Delta E^* < 3$$

Carried-in galley          Print by actual machine

$$\Delta E^* < 3$$

# FIG. 14

# FIG. 15

```
                        ( Start )
                            │
                            ▼
┌──────────────────────────────────────────────┐
│  Simulate, by depression of automatic color   │
│  adjustment button, color of reference rotary  │── c10
│  press so as to minimize ΔE* with respect to   │
│  scanner image                                 │
└──────────────────────────────────────────────┘
                            │
                            ▼
┌──────────────────────────────────────────────┐
│  Calculation apparatus varies solid density to │
│  successively produce ICC profile and carries  │
│  out convergence calculation of solid density  │── c20
│  variation value so as to minimize color       │
│  difference ΔE* of each key zone               │
└──────────────────────────────────────────────┘
                            │
                            ▼
               ╱ Trial OK? ╲──── OK ──────────────┐
               ╲           ╱     c30              │
                    │ NG                          │
                    ▼                             │
┌──────────────────────────────────────────────┐ │
│  Designate point whose color is to be adjusted │── c40
│  from monitor image                            │ │
└──────────────────────────────────────────────┘ │
                    │                             │
                    ▼                             │
┌──────────────────────────────────────────────┐ │
│  Simulate, by depression of automatic color    │ │
│  adjustment button, color of reference rotary  │── c50
│  press so as to minimize ΔE* with respect to   │ │
│  point whose color is to be adjusted           │ │
└──────────────────────────────────────────────┘ │
                    │                             │
                    ▼                             │
               ╱ Trial OK? ╲──── OK ──────────────┤
               ╲           ╱     c60              │
                    │ NG                          │
                    ▼                             │
┌──────────────────────────────────────────────┐ │
│       Manual adjustment as in case 1           │── c70
└──────────────────────────────────────────────┘ │
                    │ ◄───────────────────────────┘
                    ▼
┌──────────────────────────────────────────────┐
│  If color is adjusted, then completion button  │── c80
│  is depressed                                  │
└──────────────────────────────────────────────┘
                    │
                    ▼
┌──────────────────────────────────────────────┐
│  Transfer changed solid density value to       │── c90
│  printing automatic controlling apparatus      │
└──────────────────────────────────────────────┘
                    │
                    ▼
┌──────────────────────────────────────────────┐
│  Carry out automatic control utilizing target  │── c100
│  value changing function of printing           │
│  automatic controlling apparatus               │
└──────────────────────────────────────────────┘
                    │
                    ▼
                ( End )
```

# FIG. 16

Reference rotary press      Printing target rotary press

$\Delta E^* \fallingdotseq 3$

Reference rotary press      Print by actual machine

$\Delta E^* \fallingdotseq 3$

# FIG. 17

# FIG. 18

```
( Start )
   │
   ▼
┌─────────────────────────────────────────┐
│ Carry out color development with reference rotary │──d10
│ press LUT and determine target value     │
└─────────────────────────────────────────┘
   │
   ▼
┌─────────────────────────────────────────┐
│ Carry out color development with target rotary │──d20
│ press LUT and determine comparison value │
└─────────────────────────────────────────┘
   │
   ▼
┌─────────────────────────────────────────┐
│ Calculate solid density difference of each key zone │──d30
└─────────────────────────────────────────┘
   │
   ▼
┌─────────────────────────────────────────┐
│ Vary ICC profile of target rotary press by amount │──d40
│ corresponding to solid density difference of each key zone │
└─────────────────────────────────────────┘
   │
   ▼
┌─────────────────────────────────────────┐
│ Simulate printing finish of              │──d50
│ target rotary press with ICC profile     │
└─────────────────────────────────────────┘
   │
   ▼
< Trial OK? >────OK────┐
   │ NG      d60        │
   ▼                    │
┌─────────────────────────────────────────┐   │
│ Designate point whose color is           │──d70 │
│ to be adjusted from monitor image        │   │
└─────────────────────────────────────────┘   │
   │                    │
   ▼                    │
┌─────────────────────────────────────────┐   │
│ Simulate, by depression of automatic color adjustment button, │──d80 │
│ color of reference rotary press so as to minimize ΔE* │   │
│ with respect to point whose color is to be adjusted │   │
└─────────────────────────────────────────┘   │
   │                    │
   ▼                    │
< Trial OK? >────OK────────────────────────►
   │ NG      d90        
   ▼                    
┌─────────────────────────────────────────┐
│ Manual adjustment as in case 1           │──d100
└─────────────────────────────────────────┘
   │◄───────────────────┘
   ▼
┌─────────────────────────────────────────┐
│ If color is adjusted, then completion button is depressed │──d110
└─────────────────────────────────────────┘
   │
   ▼
┌─────────────────────────────────────────┐
│ Transfer changed solid density value to printing │──d120
│ automatic controlling apparatus          │
└─────────────────────────────────────────┘
   │
   ▼
┌─────────────────────────────────────────┐
│ Carry out automatic control utilizing target value │──d130
│ changing function of printing automatic controlling apparatus │
└─────────────────────────────────────────┘
   │
   ▼
( End )
```

## FIG. 19

ICC1 ··· ICC8

## FIG. 20(a)

```
        ( Start )
            │
            ▼
┌─────────────────────────────┐
│ Print color scale with      │ ─── e10
│ reference density with      │
│ reference rotary press      │
└─────────────────────────────┘
            │
            ▼
┌─────────────────────────────────────┐
│ Measure color scale to determine     │ ─── e20
│ relationship between tone value      │
│ and color development                │
└─────────────────────────────────────┘
            │
            ▼
┌─────────────────────────────┐
│ Produce ICC profile using   │ ─── e30
│ marketed ICC profile        │
│ production tool             │
└─────────────────────────────┘
            │
            ▼
        ( End )
```

## FIG. 20(b)

```
        ( Start )
            │
            ▼
┌────────────────────────────────────────┐
│ Produce ICC profile database wherein    │ ─── f10
│ solid density of each color of CMYK is  │
│ varied from reference density in advance│
└────────────────────────────────────────┘
            │
            ▼
┌──────────────────────────────────────────────┐
│ Refer to database from solid density variation│ ─── f20
│ calculated by calculation apparatus to select │
│ ICC profile                                    │
└──────────────────────────────────────────────┘
            │
            ▼
        ( End )
```

FIG. 21(a)

FIG. 21(b)

```
        ( Start )
            |
            v
  +---------------------+
  | Plate making data   |~~a10
  |    acquisition      |
  +---------------------+
            | cmyk
            v
  +---------------------+
  |        CTP          |~~a20
  +---------------------+
            |
            v
  +---------------------+
  |      Printing       |~~a30
  +---------------------+
            |
            v
  +---------------------+
  | Automatic control   |~~a40
  +---------------------+
            |
            v
        (  End  )
```

```
  +---------------------+
  |                     |
  |      Carried-in     |
  |        galley       |
  |                     |
  +---------------------+
            (
            20
```

## INTERNATIONAL SEARCH REPORT

| | International application No. |
|---|---|
| | PCT/JP2007/063923 |

**A. CLASSIFICATION OF SUBJECT MATTER**
*B41F33/00*(2006.01)i, *B41F31/02*(2006.01)i, *G01J3/46*(2006.01)i, *G06F3/12*(2006.01)i, *G06T1/00*(2006.01)i, *H04N1/46*(2006.01)i, *H04N1/60*(2006.01)i

According to International Patent Classification (IPC) or to both national classification and IPC

**B. FIELDS SEARCHED**

Minimum documentation searched (classification system followed by classification symbols)
B41F33/00, B41F31/02, G01J3/46, G06F3/12, G06T1/00, H04N1/46, H04N1/60

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-125222 A  (Canon Inc.),<br>25 April, 2003 (25.04.03),<br>Par. Nos. [0011] to [0030], [0036] to [0039],<br>[0063]; Figs. 1, 2<br>(Family: none) | 1-7,15-22<br>8-14,23-31 |
| X<br>Y | JP 2003-125224 A  (Canon Inc.),<br>25 April, 2003 (25.04.03),<br>Par. Nos. [0019] to [0031], [0045], [0072];<br>Figs. 1 to 3<br>(Family: none) | 1-7,15-22<br>8-14,23-31 |
| Y | WO 2006/051903 A1  (Mitsubishi Heavy<br>Industries, Ltd.),<br>18 May, 2006 (18.05.06),<br>Full text; all drawings<br>(Family: none) | 8-14,23-31 |

☐ Further documents are listed in the continuation of Box C.   ☐ See patent family annex.

| | |
|---|---|
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22 August, 2007 (22.08.07) | 04 September, 2007 (04.09.07) |

| Name and mailing address of the ISA/<br>Japanese Patent Office | Authorized officer |
|---|---|
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001018364 A
- JP 2001047605 A
- JP 2004106523 A